# EUROPEAN PATENT SPECIFICATION

(11) **EP 4 086 563 B1**
(45) Date of publication and mention of the grant of the patent: **07.05.2025**
(21) Application number: 21195394.8
(22) Date of filing: 07.09.2021
(51) Int. Cl.: F28F 9/00, B60H 1/32, B60H 1/00

(54) **INTEGRATED THERMAL MANAGEMENT UNIT, INTEGRATED THERMAL MANAGEMENT SYSTEM AND VEHICLE**
INTEGRIERTE WÄRMEVERWALTUNGSEINHEIT, INTEGRIERTES WÄRMEMANAGEMENTSYSTEM UND FAHRZEUG
UNITÉ DE GESTION THERMIQUE INTÉGRÉE, SYSTÈME DE GESTION THERMIQUE INTÉGRÉ ET VÉHICULE

(30) Priority: 16.06.2021 CN 202110666209
(43) Date of publication of application: 09.11.2022
(73) Proprietor: Guangzhou Xiaopeng New Energy Motors Co., Ltd., Guangzhou (CN)
(72) Inventor: ZHANG, Dongbin, Guangzhou (CN); LV, Yang, Guangzhou (CN); QU, Chengwu, Guangzhou (CN)
(74) Representative: Treeby, Philip David William

(56) References cited:
- CN-A- 112 886 089
- CN-U- 210 744 096
- DE-A1- 102020 113 711
- US-A1- 2009 205 346

## Description

### Field of Invention

The present invention relates to the field of vehicle technology, and more particular, to an integrated thermal management unit, an integrated thermal management system, and a vehicle.

### Background

With the prevalence of new energy vehicles, the demand for thermal management for a whole vehicle is increasing, and thus more and more components are being applied. If arranged in discrete pieces, such components will occupy more space of the front compartment and require multiple pipelines for connection and multiple brackets for secure, thereby resulting in a higher cost.

DE102020113711A1 relates to an integrated thermal management module may include a first pump for flowing coolant of an indoor heating line for connecting a first heat exchanger heat-exchanged with a condenser of a refrigerant line and an indoor air-conditioning heating core, a second pump for flowing coolant of an indoor cooling line for connecting a second heat exchanger heat-exchanged with an evaporator of a refrigerant line and an indoor air-conditioning cooling core, a fourth pump for flowing coolant of a battery line for connecting a high-voltage battery core and a third radiator, a first valve simultaneously connected to a second radiator line for connecting the first heat exchanger and a second radiator, the indoor heating line, and the battery line to change flow direction of the coolant, and a second valve simultaneously connected to the indoor cooling line and the battery line to change flow direction of the coolant.

CN210744096U relates to an integrated battery heat exchange device and an electric automobile. The power battery is arranged in the battery temperature control system loop; the integrated battery heat exchange device is provided with a heating water inlet, a passenger compartment heating water outlet, a battery heating water outlet, a temperature control water inlet, a temperature control water outlet and a refrigerant inlet, and when the refrigerant inlet, the temperature control water inlet and the temperature control water outlet are opened and the battery heating water outlet is closed, the battery temperature control system loop is a battery cooling loop; and when the heating water inlet, the battery heating water outlet, the temperature control water inlet and the temperature control water outlet are opened and the refrigerant inlet is closed, the battery temperature control system loop is a battery heating loop.

US2009/205346A1 relates to an air conditioning system for a vehicle including a primary refrigerant loop and a secondary liquid loop. The primary refrigerant loop includes a compressor configured to be selectively driven by the engine, a condenser, an expansion device and a refrigerant-to-liquid heat exchanger. The secondary liquid loop includes the refrigerant-to-liquid heat exchanger, a thermal storage reservoir within which the refrigerant-to-liquid heat exchanger is mounted, a pump configured to pump a liquid through the refrigerant-to-liquid heat exchanger, a liquid-to-air heat exchanger configured to mount in a HVAC module and receive the liquid from the refrigerant-to-liquid heat exchanger, and a liquid flow valve configured to selectively direct the liquid directly to the pump or through the thermal storage reservoir to the pump.

CN112886089A relates to a thermal management system and a vehicle. The thermal management system comprises a battery, a first pump and a first heat exchange device which are arranged on a first loop, and a driving component, a second pump and a radiator which are arranged on a second loop, wherein the radiator is used for cooling liquid in the second loop. The thermal management system further comprises a compressor, a second heat exchange device and a third heat exchange device which are arranged on a refrigerant loop, wherein the second heat exchange device can be further connected with the second loop, and the first heat exchange device is further connected to the refrigerant loop.

### Summary of Invention

The present invention is directed to an integrated thermal management unit as set out in claim 1, an integrated thermal management system as set out in claim 13, and a vehicle as set out in claim 14. Other aspects of the invention can be found in the dependent claims.

In accordance with the embodiments of the present invention, in the integrated thermal management unit, the thermal management system and the vehicle, components of the vehicle, comprising the pump assembly, the valve assembly, the water-cooling condenser, the water-water heat exchanger and the battery cooler, are all integrated on the flow channel plate, thereby saving arrangement space and wiring pipelines and reducing the cost.

Additional aspects and advantages of embodiments of the present invention will be set forth in the description below, and will become apparent from the description, or can be understand by practice of the embodiments of the present invention.

### Brief Description of Drawings

The above and/or additional aspects and advantages of the present invention will become apparent and readily understood from the following description of the embodiments with reference to the following drawings, in which:
FIG. 1 is a schematic structural view of a vehicle according to an embodiment of the present invention;
FIG. 2 is a perspective view of an integrated thermal management unit according to an embodiment of the present invention;
FIG. 3 is a schematic diagram illustrating the scheme of a thermal management system according to an embodiment of the present invention;
FIG. 4 is a perspective exploded view of an integrated thermal management unit according to an embodiment of the present invention;
FIG. 5 is a schematic plan view of an integrated thermal management unit according to an embodiment of the present invention;
FIG. 6 is another schematic plan view of an integrated thermal management unit according to an embodiment of the present invention;
FIG. 7 is another perspective view of an integrated thermal management unit according to an embodiment of the present invention;
FIG. 8 is a schematic structural view of a flow channel plate of a thermal management integrated unit according to an embodiment of the present invention;
FIG. 9 is a schematic plan view of a partial structure of an integrated thermal management unit according to an embodiment of the present invention;
FIG. 10 is a perspective view of a part of an integrated thermal management unit according to an embodiment of the present invention;
FIG. 11 is a partially exploded view of a thermal management integrated unit according to an embodiment of the present invention;
FIG. 12 is another schematic diagram illustrating the scheme of a thermal management system according to an embodiment of the present invention;
FIG. 13 is yet another schematic diagram illustrating the scheme of a thermal management system according to an embodiment of the present invention.

### Reference signs of components:

- 100: integrated thermal management unit,
- 101: flow channel plate,
- 102: upper plate,
- 103: lower plate,
- 104: flow channel groove,
- 105: fixing connectors,
- 106: pump assembly,
- 107: heating water pump,
- 108: battery water pump,
- 109: motor water pump,
- 110: valve assembly,
- 111: water-cooling condenser,
- 112: water-water heat exchanger,
- 113: battery cooler,
- 114: water tank,
- 115: mounting base,
- 116: first coolant interface,
- 117: second coolant interface,
- 118: third coolant interface,
- 119: first throttle,
- 120: second throttle,
- 121: shutoff valve,
- 122: one-way valve,
- 123: pressure-temperature sensor,
- 124: temperature sensor,
- 125: electrical control connection element,
- 126: connector,
- 127: wire,
- 136: first five-way valve,
- 137: second five-way valve;
- 200: thermal management system,
- 201: compressor,
- 202: outdoor heat exchanger,
- 203: radiator,
- 204: electric drive component,
- 2041: rear speed reducer
- 2042: rear motor
- 2043: rear motor controller
- 2044: charging and power distribution module
- 2045: front motor and speed reducer
- 2046: front motor controller
- 2047: screen controller
- 2048: processor
- 205: traction battery,
- 206: evaporator,
- 207: heater core,
- 208: liquid heater,
- 209: gas-liquid separator,
- 210: third throttle,
- 211: external shutoff valve;
- 300: vehicle,
- 301: vehicle body.

### Detailed Description

The embodiments of the present invention will now be described in detail, examples of which are illustrated in the accompanying drawings. Same or similar reference numerals indicate same or similar elements or elements having same or similar functions throughout. The embodiments described with reference to the drawings below are illustrative only and are not to be construed as limiting the present invention.

In the description of the embodiments of the present invention, terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of" or "multiple" means two or more.

In the description of the embodiments of the present invention, it is noted that, unless specifically specified and indicated, terms "mount," "communicate," "connect" and variations thereof are to be construed broadly as indicating, for example, a fixed connection, a removable connection, or an integral connection; a direct connection, an indirect connection through an intermediate medium; interconnection between related elements, or interaction between related elements. It will be apparent to those of ordinary skills in the art that specific meanings of the above terms in the embodiments of the present invention are to be construed depending on specific situations.

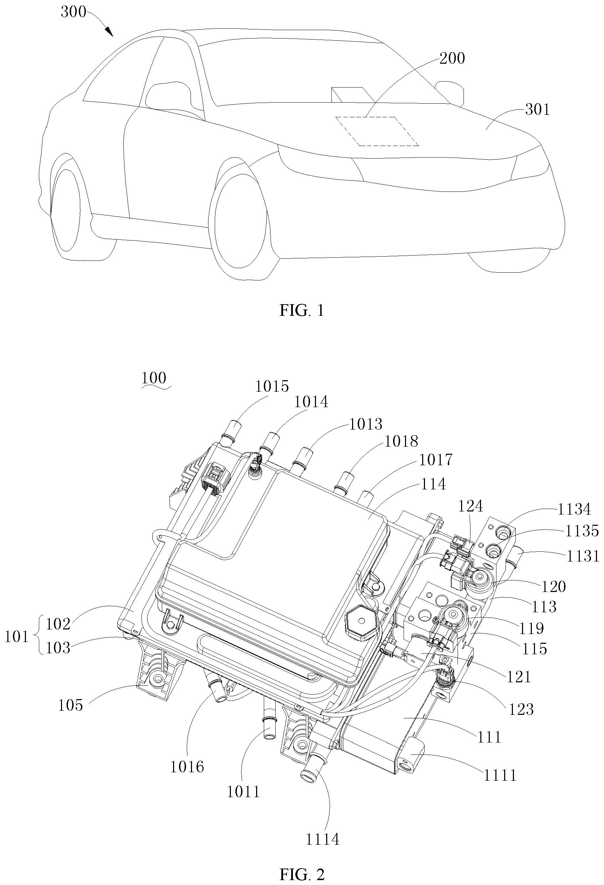

Referring to FIG. 1, in an embodiment of the present invention, a vehicle 300 comprises a vehicle body 301 and a thermal management system 200 according to an embodiment of the present invention. The thermal management system 200 is mounted on the vehicle body 301. Specifically, the vehicle 300 may be, for example, a hybrid vehicle or an electric vehicle.

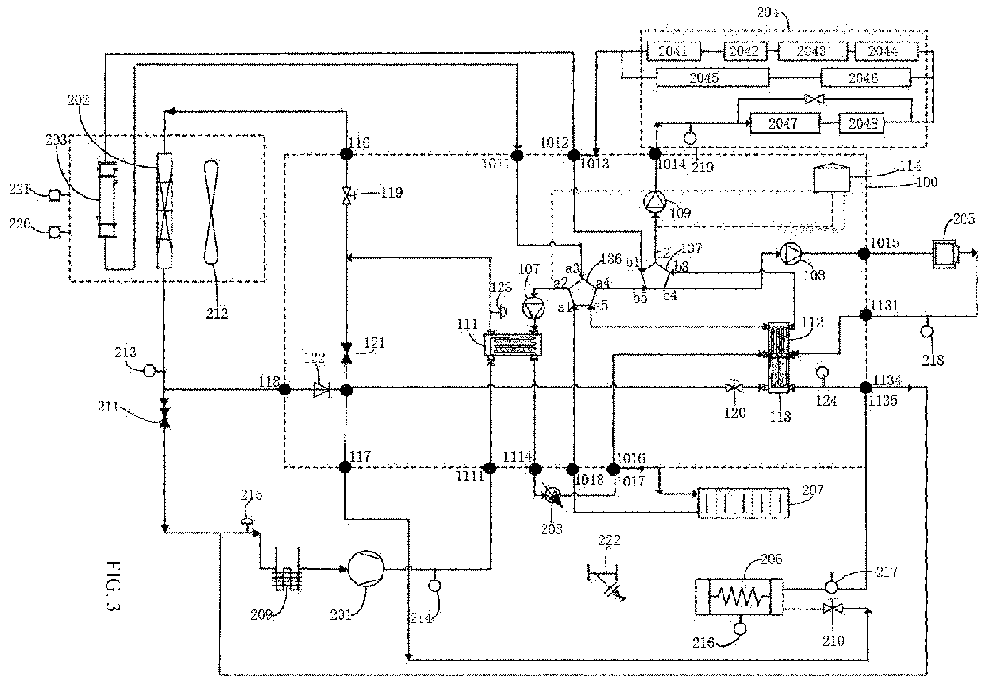

Referring to FIGS. 2 and 3, the thermal management system 200 comprises: a compressor 201, an outdoor heat exchanger 202, a radiator 203, an electric drive component 204, a traction battery 205, an evaporator 206, a heater core 207, a liquid heater 208, a gas-liquid separator 209 and an integrated thermal management unit 100 of the present invention. The compressor 201 is configured to compress and deliver coolant, the gas-liquid separator 209 is connected to an inlet of the compressor 201, the outdoor heat exchanger 202 is configured to allow coolant to flow in and to exchange heat with the air outside the vehicle 300, the evaporator 206 is configured to allow coolant to flow in and to cool the passenger compartment of the vehicle 300, the heater core 207 is configured to warm the passenger compartment of the vehicle 300 by air conditioning, and the liquid heater 208 is configured to heat a cooling liquid.

The radiator 203 is configured to cool a cooling liquid passing therethrough. The electric drive component 204 may comprise a drive motor, a speed reducer, a charging and power distribution module, and a vehicle controller of the vehicle 300. The drive motor may be plural in number. For example, the drive motor may comprise, such as, a front motor and a rear motor. The speed reducer may comprise a front speed reducer and a rear speed reducer. The vehicle controller may comprise electric control elements such as a processor, a screen controller, a front motor controller and a rear motor controller, and a self-driving controller. The drive motor is connected to the traction battery 205 to drive the vehicle 300 by electrical energy. The various elements in the electric drive component 204 are connected through a cooling liquid pipeline. The cooling liquid in the cooling liquid pipeline may be provided to heat or cool the electric drive component 204.

Referring to FIG. 3, in an embodiment of the present invention, the outdoor heat exchanger 202 and the radiator 203 may collectively form a front heat radiating module of the vehicle 300. The thermal management system 200 may further comprise an electronic fan 212, which may be provided corresponding to the outdoor heat exchanger 202 and the radiator 203. The electronic fan 212 is configured to form an air flow flowing through the outdoor heat exchanger 202 and the radiator 203 to allow sufficient heat exchange between the air and the coolant in the outdoor heat exchanger 202 and between air and the cooling liquid in the radiator 203.

In an embodiment of the present invention, the heater core 207 and the evaporator 206 may collectively form an air conditioning module of the vehicle 300. The heater core 207 may be configured to heat the passenger compartment, and the evaporator 206 may be configured to cool the passenger compartment. The heater core 207 and the evaporator 206 may also have respective electronic fans to provide hot air and cold air. The heater core 207 and the evaporator 206 may share a fan or may utilize two separate fans. The arrangement of a fan or fans is not limited herein.

Referring to FIG. 3, an air quality sensor 221 and an outside temperature sensor 220 may be provided to the front heat radiating module of the vehicle 300 formed by the outdoor heat exchanger 202 and the radiator 203, to detect the air quality and the temperature outside the cabin of the occupant respectively. Further, an outdoor heat exchanger outlet temperature sensor 213 is provided at the outlet of the outdoor heat exchanger 202 for measuring the temperature at the outlet of the outdoor heat exchanger 202. A compressor exhaust temperature sensor 214 is provided at the outlet of the compressor 201 for detecting the temperature at the outlet of the compressor 201. A low pressure sensor 215 is provided at the inlet of the gas-liquid separator 209 or at the inlet of the gas-liquid separator 209 and of the compressor 201, which is configured to detect the pressure of the coolant back into the gas-liquid separator 209 and the compressor 201. A surface temperature sensor 216 is also provided on the surface of the evaporator 206 for detecting the temperature of the surface of the evaporator 206. A first water temperature sensor 218 is also provided at the outlet of the traction battery 205, for detecting the temperature of cooling liquid exiting the traction battery 205 to feed back the temperature of the traction battery 205. A second water temperature sensor 219 is also provided at the inlet of the electric drive component 204, for detecting the temperature of the cooling liquid exiting the electric drive component 204. In addition, the thermal management system 200 may also comprise a house sensor 222 for detecting the humidity in the passenger compartment of the vehicle and the temperature of the window glass of the vehicle.

Referring to FIGS. 2 to 8, in an embodiment of the present invention, the integrated thermal management unit 100 comprises a flow channel plate 101, a pump assembly 106, a valve assembly 110, a water-cooling condenser 111, a water-water heat exchanger 112, and a battery cooler 113.

A plurality of flow channels are formed in the flow channel plate 101. The pump assembly 106 and the valve assembly 110 are integrated on the flow channel plate 101. The pump assembly 106 comprises a heating water pump 107, a battery water pump 108, and a motor water pump 109, the inlets of the heating water pump 107, the battery water pump 108, and the motor water pump 109 each is connected to the valve assembly 110 through a flow channel. The water-cooling condenser 111, the water-water heat exchanger 112, and the battery cooler 113 are also integrated on the flow channel plate 101.

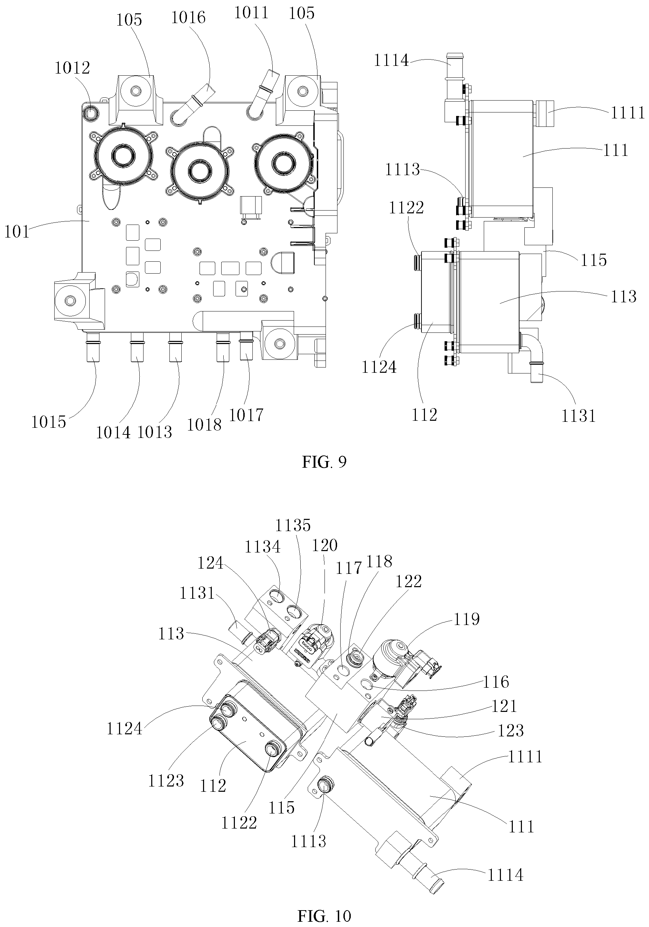

Referring to FIGS. 9 to 11, the water-cooling condenser 111 comprises a cooling liquid input 1113 and a cooling liquid output 1114. The cooling liquid input 1113 of the water-cooling condenser 111 is connected to the outlet of the heating water pump 107 through a flow channel in the flow channel plate 101. The cooling liquid output 1114 of the water-cooling condenser 111 is configured to connect to the inlet of the liquid heater 208. The water-cooling condenser 111 further comprises a coolant input 1111 and a coolant output 1112. The coolant input 1111 of the water-cooling condenser 111 is configured to connect to the outlet of the compressor 201, and the coolant output 1112 of the water-cooling condenser 111 is configured to connect to the inlet of the outdoor heat exchanger 202.

The battery cooler 113 comprises a coolant input 1133 configured to connect to the outlet of the outdoor heat exchanger 202 and a coolant output 1133 configured to connect to the inlet of the gas-liquid separator 209 and the outlet of the evaporator 206. Specifically, the coolant output of the battery cooler 113 may comprise a first coolant output 1134 configured to connect to an inlet of the gas-liquid separator 209 of the vehicle 300 and a second coolant output 1135 configured to connect to an outlet of the evaporator 206.

The battery cooler 113 further comprises a cooling liquid input 1131 and a cooling liquid output 1132. The water-water heat exchanger 112 comprises a first cooling liquid input 1121 and a first cooling liquid output 1122, and comprises a second cooling liquid input 1123 and a second cooling liquid output 1124.

The cooling liquid input 1131 of the battery cooler 113 is connected with the first cooling liquid input 1121 and the first cooling liquid output 1122 of the water-water heat exchanger 112. The first cooling liquid output 1122 of the water-water heat exchanger 112 is connected to the valve assembly 110 through a flow channel in the flow channel plate 101. The cooling liquid input 1131 of the battery cooler 113 is configured to connect to the outlet of the traction battery 205, and the outlet of the battery water pump 108 is configured to connect to the inlet of the traction battery 205.

The second cooling liquid input 1123 of the water-water heat exchanger 112 is configured to connect to the outlet of the liquid heater 208 and the inlet of the heater core 207 through a flow channel in the flow channel plate 101. The second cooling liquid output 1124 of the water-water heat exchanger 112 is connected to the valve assembly 110 through a flow channel. The valve assembly 110 is also configured to connect to the electric drive component 204 and the radiator 203 of the vehicle 300, and is configured to control the flow direction of the cooling liquid in the integrated thermal management unit 100.

It will be appreciated that, in the related art, with the prevalence of new energy vehicles, the demand for thermal management of a whole vehicle is increasing, and more and more components are thus being applied. If arranged in discrete pieces, such components will occupy more space of the front compartment and require multiple pipelines for connection and multiple brackets for secure, thereby resulting in a higher cost.

In the integrated thermal management unit 100, the thermal management system 200 and the vehicle 300 of the embodiments of the present invention, components of the vehicle 300, such as the pump assembly 106, the valve assembly 110, the water-cooling condenser 111, the water-water heat exchanger 112 and the battery cooler 113, are all integrated on the flow channel plate 101. Such a centralized deployment of the various components on the flow channel plate 101 saves arrangement space and wiring lines, thereby reducing costs. Moreover, the components, such as the pump assembly 106, the valve assembly 110, the water-cooling condenser 111, the water-water heat exchanger 112 and the battery cooler 113, are all communicated through the flow channels provided in the flow channel plate 101. This saves external pipelines, and the shorter flowing path avoids pressure loss that may be otherwise caused by the coolant and the cooling liquid flowing a long path, improving cooling and heating effects.

Specifically, in embodiments of the present invention, various modes may be achieved by controlling connection of valve ports of the valve assembly 110. For example, various modes of the vehicle 300 may be achieved, such as cooling by air conditioning, forced cooling of the traction battery, heating by air conditioning, heating of the traction battery, natural heat dissipation of the electric drive component, heat preservation of the battery with heat from the electric drive component, dehumidification of the passenger compartment, heating of the passenger compartment with heat from the electric drive component, de-icing mode, and the like.

Referring to FIGS. 2 to 5, in an embodiment of the present invention, the integrated thermal management unit 100 further comprises a water tank 114 integrated on the flow channel plate 101. The water tank 114 is disposed at the top of the flow channel plate 101. The pump assembly 106 and the valve assembly 110 are integrated at the bottom of the flow channel plate 101. The battery cooler 113, the water-water heat exchanger 112 and the water-cooling condenser 111 are integrated at a side or sides of the flow channel plate 101.

In this way, the space at the top, bottom and sides of the flow channel plate 101 can be fully utilized to integrate components such as the water tank 114, the pump assembly 106, the valve assembly 110 and the battery cooler 113, which further saves the arrangement space and improves integration level.

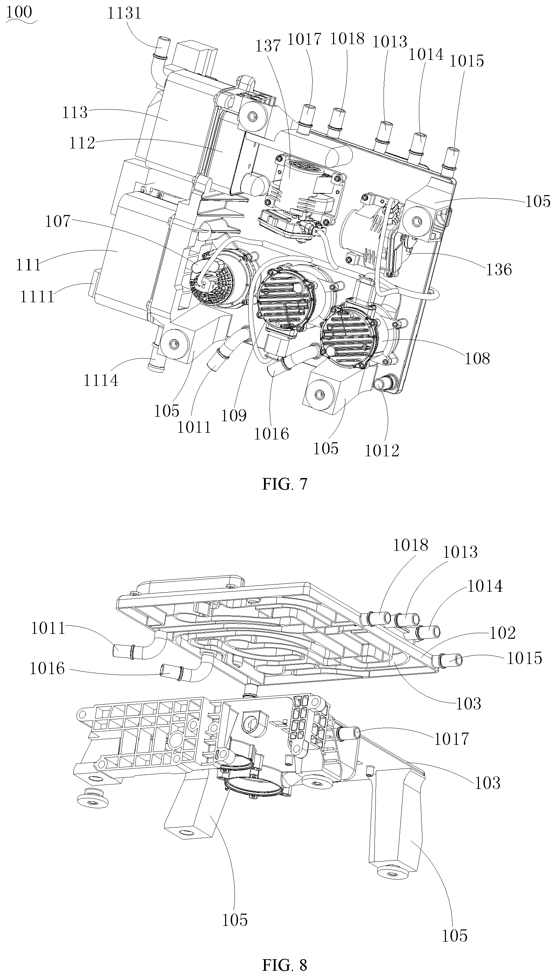

Specifically, with reference to FIG. 8, in an embodiment of the present invention, the flow channel plate 101 comprises an upper plate 102 and a lower plate 103. The upper plate 102 has a plurality of flow channel grooves 104 formed thereon. The upper plate 102 and the lower plate 103 are hermetically engaged to enclose the flow channel grooves 104 to form a plurality of flow channels. The lower plate 103 may serve as a body carrying structure. The pump assembly 106 and the valve assembly 110 are integrated at the bottom of the lower plate 103 of the flow channel plate 101. The lower plate 103 has several openings formed therein. The heating water pump 107, the battery water pump 108, the motor water pump 109, and the valve ports of the valve assembly 110 may be connected with the flow channels of the flow channel plate 101 through the openings in the lower plate 103. The battery cooler 113, the water-water heat exchanger 112, and the water-cooling condenser 111 are integrated on the side or sides of the lower plate 103. The water tank 114 may be disposed at the top of the upper plate 102. The upper plate may have openings therein that are connected with the heating water pump 107, the battery water pump 108 and the motor water pump 109. Each of the heating water pump 107, the battery water pump 108 and the motor water pump 109 is connected with the water tank 114 through a flow channel and the openings in the upper plate 102. The pump assembly 106 and the valve assembly 110 are provided at the bottom of the flow channel plate 101. The water-cooling condenser 111, the water-water heat exchanger 112 and a battery cooling medium are provided at the sides of the flow channel plate 101.

Of course, it will be appreciated that in other embodiments, the lower plate 103 may have a plurality of flow channel grooves 104 formed therein, or both the lower plate 103 and the upper plate 102 may have flow channel grooves 104 formed therein. The present invention is not limited in this aspect.

In such embodiments, the water tank 114 is provided to store cooling liquid, such as cooling water. The water tank 114 may be plural or single in number. It is possible that each pump corresponds to one water tank 114, or multiple pumps correspond to one water tank 114, or multiple water tanks 114 correspond to one pump. The present invention is not limited to any particular arrangement of the water tank and the pumps. A connection port is provided on the top of the flow channel plate 101. The water tank 114 is mounted on the flow channel plate 101 and is connected with the flow channels in the flow channel plate 101 through the connection port, The water tank 114 is connected with the heating water pump 107, the battery water pump 108 and the motor water pump 109 through the flow channels, such that the heating water pump 107, the battery water pump 108 and the motor water pump 109 can each draw cooling liquid from the water tank 114 to be pumped to other parts of the integrated thermal management unit 100. The water tank 114 may be an expansion water tank.

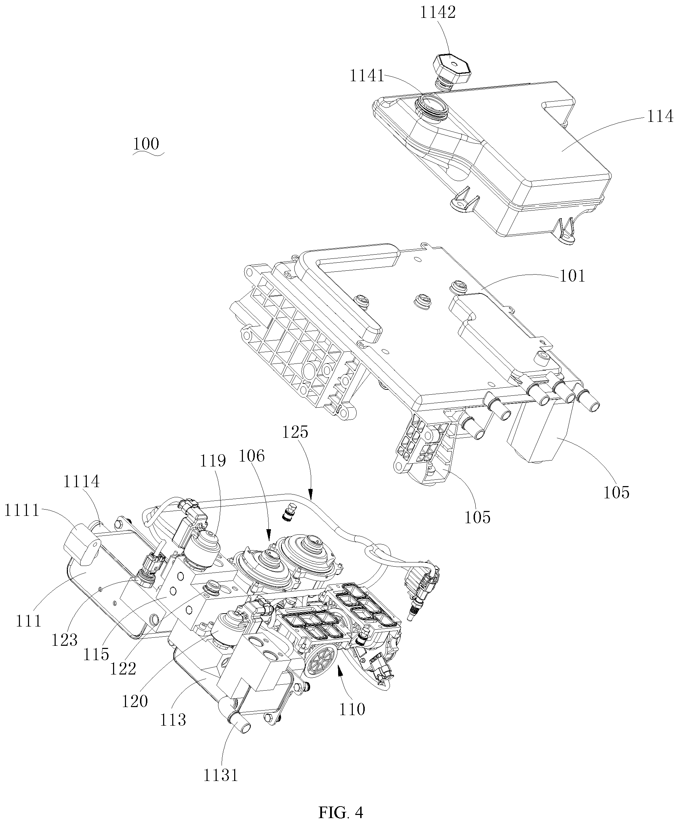

In addition, referring to FIG. 4, a water inlet 1141 is formed on the water tank 114. The water inlet 1141 may be sealed by a water inlet cap 1142. A user may unscrew the water inlet cap 1142 to fill the water tank 114 with water through the water inlet 1141.

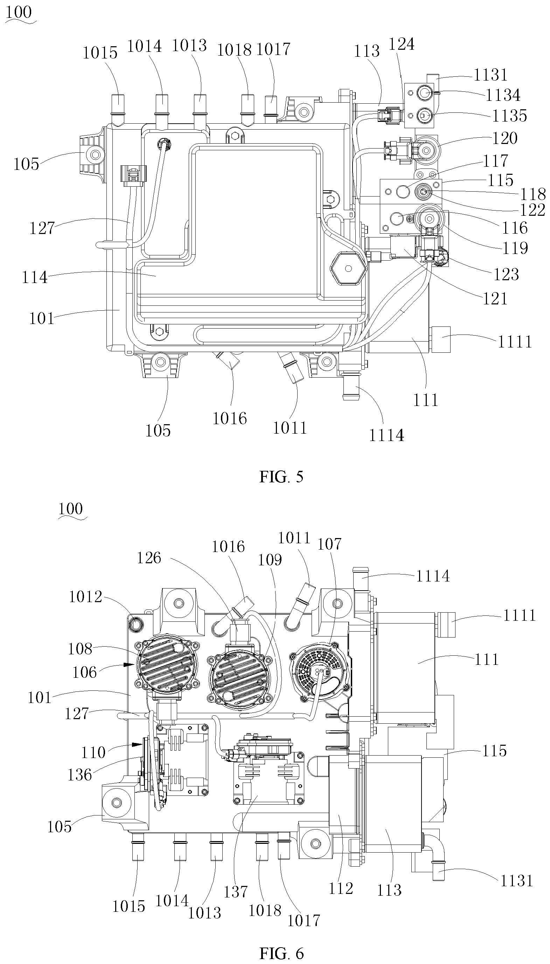

Referring to FIGS. 2 and 4, in an embodiment of the present invention, the lower plate 103 of the flow channel plate 101 has a plurality of fixing connectors 105 formed thereon. The fixing connectors 105 are provided on the lower plate 103 of the flow channel plate 101 and protrude therefrom. The fixing connectors 105 are configured to connect to the vehicle body 301 of the vehicle 300 to mount the entire integrated thermal management unit 100 integrally on the vehicle body 301, so as to eliminate the need to mount a plurality of parts separately on the vehicle, thereby simplifying the mounting process and saving mounting space. For example, as shown in FIG. 5, 4 fixing connectors 105 may be provided, which are separately located at four corners of the flow channel plate 101. In other embodiments, of course, the number of fixing connectors 105 may be less than 4 or greater than 4, such as 3 or 5. Preferably, in an embodiment of the present invention, the number of fixing connectors 105 may be set to be no less than 3 in order to improve mounting stability.

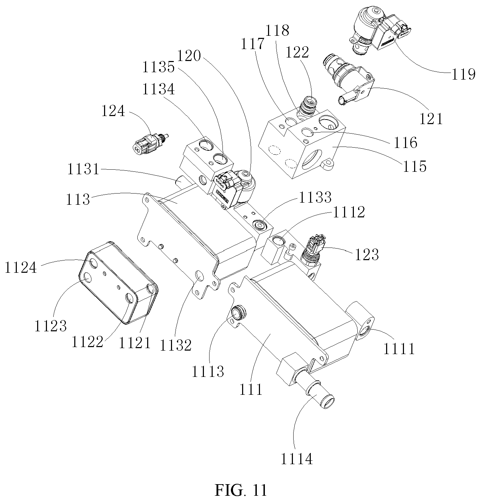

Referring to FIG. 10 and FIG. 11, in an embodiment of the present invention, the battery cooler 113 and the water-water heat exchanger 112 are integrally arranged. The cooling liquid output 1132 of the battery cooler 113 is mated to the first cooling liquid input 1121 of the water-water heat exchanger 112, and the battery cooler 113 and the water-water heat exchanger 112 share a cooling liquid flow pipeline. That is, the battery cooler 113 and the water-water heat exchanger 112 are integrally formed, and a cooling liquid flowing pipeline for the battery cooler 113 is reused as one of the cooling liquid flowing pipelines for the water-water heat exchanger 112. Such an arrangement of the battery cooler 113 and the water-water heat exchanger 112 can improve the integration level without the need for external connection pipelines for connection, which saves the cost and shortens routing of the cooling liquid to avoid pressure and heat loss.

Referring to FIGS. 2 to 7 and FIGS. 9 to 11, in an embodiment of the present invention, the integrated thermal management unit 100 further comprises a mounting base 115 integrally mounted on the water-cooling condenser 111 and the battery cooler 113. The mounting base 115 has an inlet, a first coolant interface 116, a second coolant interface 117, a third coolant interface 118 and an outlet formed therein. Channels are formed in the mounting base 115 for connection between the inlet, the first coolant interface 116, the second coolant interface 117, the third coolant interface 118 and the outlet. The inlet is matched and connected with the coolant output 1112 of the water-cooling condenser 111. The first coolant interface 116 and the second coolant interface 117 are connected to the inlet in parallel. The third coolant interface 118 is connected with the outlet and the second coolant interface 117. In other words, the first coolant interface 116 is connected to the coolant output 1112 of the water-cooling condenser 111. The second coolant interface 117 is connected to the coolant output 1112 of the water-cooling condenser 111 and is connected in parallel with the first coolant interface 116. The first coolant interface 116 is configured to connect to the inlet of the outdoor heat exchanger 202 of the vehicle 300. The second coolant interface 117 is configured to connect to the inlet of the evaporator 206 of the vehicle 300. The third coolant interface 118 is configured to mate at one end with the coolant input 1133 of the battery cooler 113 and to connect at the other end with the outlet of the outdoor heat exchanger 202.

The integrated thermal management unit 100 further comprises a first throttle 119, a shutoff valve 121 and a one-way valve 122. The first throttle 119 is mounted on the mounting base 115 and connected in series with the first coolant interface 116. The first throttle 119 may be a coolant throttling element such as an electronic expansion valve for regulating the flow of a coolant entering the outdoor heat exchanger 202 and for throttling a coolant before entering the outdoor heat exchanger 202. In this way, the first throttle 119 can also be integrated on the flow channel plate 101 through the mounting base 115, further saving the mounting space and improving the integration level. Further, the water-cooling condenser 111 is indirectly connected to the outdoor heat exchanger 202 through the mounting base 115. In this way, when replacing the first throttle 119, a user only needs to directly remove the mounting base 115 or directly remove the first throttle 119 from the mounting base 115, without contacting the water-cooling condenser 111, which improves the convenience and safety of operation.

The shutoff valve 121 is also mounted on the mounting base 115. The shutoff valve 121 is connected in series between the inlet of the mounting base 115 and the second coolant interface 117 and configured to connect the second coolant interface 117 with the coolant output 1112 of the water-cooling condenser 111 and isolating the second coolant interface 117 from the coolant output 1112 of the water-cooling condenser 111. The second coolant interface 117 is configured to connect to the inlet of the evaporator 206 of the vehicle 300. Thus, on the one hand, the integral mounting of the shutoff valve 121 on the mounting base 115 may further save mounting space to improve the integration level; and on the other hand, the cooperation of the first throttle 119 with the shutoff valve 121 can control whether the coolant flows first through the outdoor heat exchanger 202 or first through the evaporator 206 to achieve cooling and heating functions.

In addition, referring to FIG. 11, the third coolant interface 118 on the mounting base 115 is connected with the coolant input 1133 of the battery cooler 113 and the second coolant interface 117. A one-way valve 122 is installed at the third coolant interface 118. The first coolant output 1134 of the battery cooler 113 is configured to connect to the gas-liquid separator 209 of the vehicle 300, and the gas-liquid separator 209 is connected to the compressor 201. The second coolant output 1135 of the battery cooler 113 is configured to connect to the outlet of the evaporator 206.

Thus, on the one hand, provision of the one-way valve 122 allows the coolant to only flow in one direction, i.e., from the third coolant interface 118 to the integrated thermal management unit 100, and not flow back to the third coolant interface 118; and on the other hand, the integrating the one-way valve 122 on the mounting base 115 can further save the mounting space to improve the integration level.

Further, in an embodiment of the present invention, the integrated thermal management unit 100 further comprises a second throttle 120 and a temperature sensor 124, both of which are integrated on the battery cooler 113. The second throttle 120 is positioned at the coolant input 1133 of the battery cooler 113, and the temperature sensor 124 is positioned at the coolant outputs of the battery cooler 113 (which comprise the first coolant output 1134 and the second coolant output 1135). The second throttle 120 may also be a coolant throttling element such as an electronic expansion valve. In this way, the flow of coolant entering the battery cooler 113 may be regulated and coolant before entering the battery cooler 113 may be throttled by the second throttle 120, while the temperature of coolant exiting the battery cooler 113 may be monitored by the temperature sensor 124. Moreover, the integration of the second throttle 120 and the temperature sensor 124 on the battery cooler 113 may further improve the integration level, save mounting space, and eliminate the need for external connecting lines to reduce cost.

Referring to FIG. 3, in an embodiment of the present invention, the outlet of the outdoor heat exchanger 202 is further connected to the gas-liquid separator 209, and an external shutoff valve 211 is provided between the outlet of the outdoor heat exchanger 202 and the gas-liquid separator 209. An end of the third coolant interface 118 may be connected between the outlet of the outdoor heat exchanger 202 and the external shutoff valve 211. In this way, the external shutoff valve 211 and the second throttle 120 can be utilized to control whether coolant exiting the outdoor heat exchanger 202 flows through the battery cooler 113 and the evaporator 206 or directly flows back into the gas-liquid separator 209. Additionally, in an embodiment of the present invention, a third throttle 210, which may also be a coolant throttling element such as an electronic expansion valve, is provided at the inlet of the evaporator 206, for regulating the flow of coolant entering the evaporator 206 and for throttling coolant before entering the evaporator 206.

In such an embodiment, the integrated thermal management unit 100 further comprises a pressure-temperature sensor 123 mounted at the coolant output 1112 of the water-cooling condenser 111.

As such, the pressure-temperature sensor 123 is also directly integrated on the water-cooling condenser 111, further improving the integration level. The pressure-temperature sensor 123 is configured to monitor the pressure and temperature of coolant at the coolant output 1112 of the water-cooling condenser 111.

Referring to FIGS. 4 and 6, the integrated thermal management unit 100 further comprises an electrical control connection element 125, which may comprise a number of connectors 126 and a number of wires 127. The connectors 126 may be configured to join the heating water pump 107, the battery water pump 108, the motor water pump 109, the valve assembly 110, the first throttle 119, the second throttle 120, the shutoff valve 121, the pressure-temperature sensor 123, and the temperature sensor 124. The connectors 126 are connected to each other through the wires 127. In this way, electrical components (e.g., the pump assembly and the valve assembly, etc.) in the integrated thermal management unit 100 as a whole may be directly connected to control components of the vehicle 300 (e.g., an vehicle controller,) through the electrical control connection element 125 to enable control of the integrated thermal management unit 100, without having to be separately connected to different electrical control components using multiple interfaces, thereby increasing the integration level.

Referring to FIGS. 2 to 7, FIG. 3 is a schematic diagram illustrating the scheme of the integrated thermal management unit 100 and the thermal management system 200 according to an embodiment of the present invention. FIGS. 2 and 4 to 7 are schematic diagrams illustrating the structure of the integrated thermal management unit 100 according to an embodiment of the present invention.

In the illustrated embodiments, the flow channel plate 101 has formed thereon a first interface 1011, a second interface 1012, a third interface 1013, a fourth interface 1014, a fifth interface 1015, a sixth interface 1016, a seventh interface 1017, and an eighth interface 1018. The valve assembly 110 may comprise a first five-way valve 136 and a second five-way valve 137.

Referring to FIG. 2, the first port a1 of the first five-way valve 136 is connected to the eighth interface 1018 through a flow channel, and the eighth interface 1018 is configured to connect to the outlet of the heater core 207. The second port a2 of the first five-way valve 136 is connected with the heating water pump 107 through a flow channel. The third port a3 of the first five-way valve 136 is connected with the first interface 1011 through a flow channel, and the first interface 1011 is configured to connect to the outlet of the radiator 203. The fourth port a4 of the first five-way valve 136 is connected to the fifth port b5 of the second five-way valve 137 through a flow channel. The fifth port a5 of the first five-way valve 136 is connected to the second cooling liquid output 1124 of the water-water heat exchanger 112 through a flow channel. The first port b1 of the second five-way valve 137 is connected to the second interface 1012 and the third interface 1013 through a flow channel, and the second interface 1012 is connected with the third interface 1013. The second interface 1012 is configured to connect to the inlet of the radiator 203, and the third interface 1013 is configured to connect to the outlet of the electric drive component 204. The second port b2 of the second five-way valve 137 is connected to the inlet of the motor water pump 109 through a flow channel. The motor water pump 109 is connected to the fourth interface 1014 through a flow channel, and the fourth interface 1014 is configured to connect to the inlet of the electric drive component 204. The third port b3 of the second five-way valve 137 is connected to the first cooling liquid output 1122 of the water-water heat exchanger 112 through a flow channel. The fourth port b4 of the second five-way valve 137 is connected to the inlet of the battery water pump 108 through a flow channel, the battery water pump 108 is connected with the fifth interface 1015 through a flow channel, and the fifth interface 1015 is configured to connect to the inlet of the traction battery 205. The fifth port b5 of the second five-way valve 137 is connected to the fourth port a4 of the first five-way valve 136. The second cooling liquid input 1123 of the water-water heat exchanger 112 is connected to the sixth interface 1016 and the seventh interface 1017 through a flow channel, and the sixth interface 1016 is connected with the seventh interface 1017. The sixth interface 1016 is configured to connect to the inlet of the heater core 207, and the seventh interface 1017 is configured to connect to the outlet of the liquid heater 208.

In this way, different operation modes may be achieved by varying the flow path of the cooling liquid through connection relation of respective ports of the two five-way valves.

For example, referring to FIG. 3, the mode of the forced cooling of the traction battery 205 can be enabled by controlling the connection of the five-way valves. In this case, the compressor 201 and the battery water pump 108 are activated; the shutoff valve 121 of the integrated thermal management unit 100 is in a closed position; the first throttle 119 is in a fully open position; the external shutoff valve 211 is in a closed position; the second throttle 120 is in a throttling position; the third throttle 210 is in a closed position; and the third port b3 and the fourth port b4 of the second five-way valve 137 are connected . In such a case, the compressor 201 outputs coolant. The coolant flows through the water-cooling condenser 111 (the heating water pump 107 is not activated, and heat exchange is generally not occurred in the water-cooling condenser 111), then enters the outdoor heat exchanger 202 through the first throttle 119 to cool and release heat, and then enters the battery cooler 113 through the one-way valve 122. At the same time, the battery water pump 108 is in an activated position, and the cooling liquid is cyclically delivered to the traction battery 205 by the battery water pump 108 to take away heat generated by the traction battery 205. The taken away heat causes the coolant, in the battery cooler 113, to absorb heat and evaporate through heat exchange between the cooling liquid and the coolant. The evaporated coolant exits from the first coolant output 1134 of the battery cooler 113, enters the gas-liquid separator 209, and at last returns to the compressor 201 for the next cycle.

In another example, the modes of cooling by air conditioning and cooling of the battery can be enabled by controlling connection of the various ports of the five-way valves. In this case, the compressor 201 and the battery water pump 108 are activated; the shutoff valve 121 of the integrated thermal management unit 100 is in the closed position; the first throttle 119 is in the fully open position; the external shutoff valve 211 is in the closed position; the second throttle 120 is in the throttling position; the third throttle 210 is in a throttling position; and the third port b3 and the fourth port b4 of the second five-way valve 137 are connected. In such a case, the compressor 201 outputs coolant. The coolant flows through the water-water condenser (the heating water pump 107 is not activated, and heat exchange is generally not occurred in the water-cooling condenser 111), then enters the outdoor heat exchanger 202 through the first throttle 119 to cool and release heat, and then enters the one-way valve 122 from the third coolant interface 118 and passes through the one-way valve 122. After that, a part of the coolant flows into the battery cooler 113, and the other part flows into the evaporator 206 through the second coolant interface 117. The coolant flowing into the battery cooler 113 exchanges heat with the cooling liquid to absorb heat and evaporate so as to cool the traction battery 205, and the evaporated coolant exits from the first coolant output 1134 of the battery cooler 113. The coolant flowing into the evaporator 206 exchanges heat, in the evaporator 206, with the air in the passenger compartment of the vehicle to absorb heat and evaporate so as to cool the air in the vehicle, and the evaporated coolant flows into the first coolant output 1134 from the second coolant output 1135 of the battery cooler 113. In other words, the two flows of the coolant converge at the first coolant output 1134, flow into the gas-liquid separator 209, and then enter the compressor 201 for the next cycle.

It will be appreciated that in the embodiment shown in FIG. 2, while cooling of the traction battery 205 is achieved, other functions may also be enabled depending on function requirements. For example, while cooling of the traction battery 205 is achieved, heat dissipation of the electric drive component 204 may be realized with following configuration. The second port b2 of the second five-way valve 137 is connected with the fifth port b5 of the second five-way valve 137. The third port a3 of the first five-way valve 136 is connected with the fourth port a4 of the first five-way valve 136. The motor water pump 109 is activated. The cooling liquid is delivered by the motor water pump 109 to the electric drive component 204 and then flows from the third interface 1013 of the flow channel plate 101 into the radiator 203 and then flows back to the motor water pump 109 from the first interface 1011, the third port a3 and the fourth port a4 of the first five-way valve 136, and the fifth port b5 and the second port b2 of the second five-way valve 137.

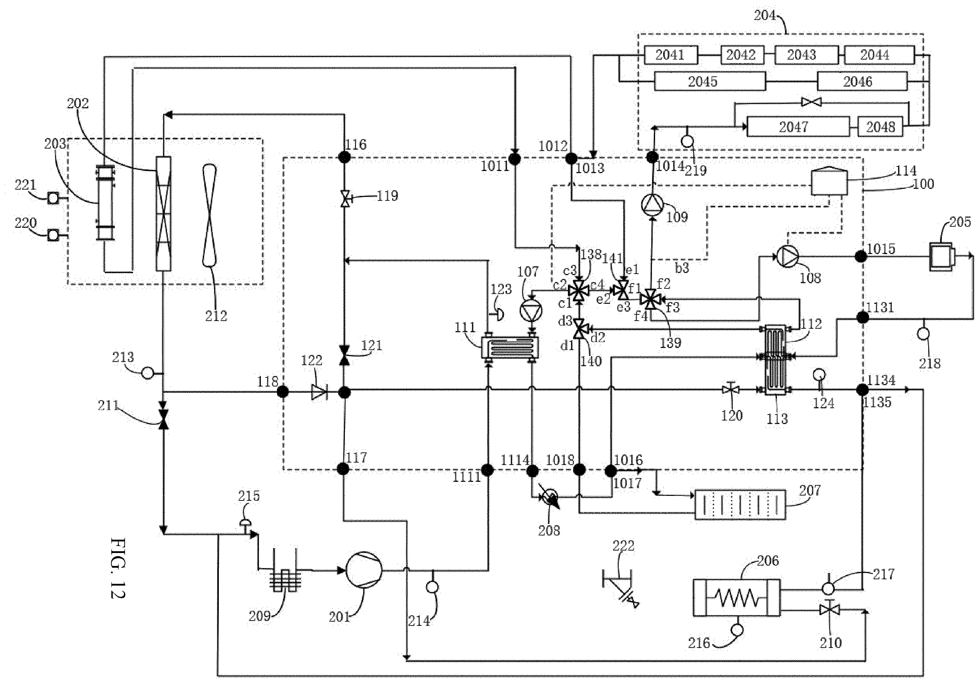

It will be appreciated that, referring to FIG. 12, in other embodiments, the first five-way valve 136 may be replaced with a first four-way valve and a first three-way valve, and the second five-way valve 137 may be replaced with a second four-way valve and a second three-way valve. Referring to FIG. 12, in such an embodiment, the first port c1 of the first four-way valve 138 is connected to the third port d3 of the first three-way valve 140. The first port d1 of the first three-way valve is connected to the eighth interface 1018 through a flow channel, and the second port d2 of the first three-way valve 140 is connected to the second cooling liquid output 1124 of the water-water heat exchanger 112 through a flow channel. The second port c2 of the first four-way valve 138 is connected with the heating water pump 107 through a flow channel. The third port c3 of the first four-way valve 138 is connected with the first interface 1011 through a flow channel, and the first interface 1011 is configured to connect to the outlet of the radiator 203. The fourth port c4 of the first four-way valve 138 is connected with the second port e2 of the second three-way valve 141 through a flow channel. The first port e1 of the second three-way valve 141 is connected to the second interface 1012 and the third interface 1013. The second interface 1012 and the third interface 1013 are connected, the second interface 1012 is configured to connect to the inlet of the radiator 203, and the third interface 1013 is configured to connect to the outlet of the electric drive component 204. The third port e3 of the second three-way valve 141 is connected with the first port f1 of the second four-way valve 139. The second port f2 of the second four-way valve 139 is connected to the inlet of the motor 109 through a flow channel, and the inlet of the motor water pump 109 is connected with fourth interface 1014 that is configured to connect to the inlet of the electric drive component 204. The third port f3 of the second four-way valve 139 is connected to the first cooling liquid output 1122 of the water-water heat exchanger 112 through a flow channel. The fourth port f4 of the second four-way valve 139 is connected to the inlet of the battery water pump 108, and the battery water pump 108 is connected with the fifth interface 1015 through a flow channel. The fifth interface 1015 is configured to connect to the inlet of the traction battery 205. The second cooling liquid input 1123 of the water-water heat exchanger 112 is connected to the sixth interface 1016 and the seventh interface 1017. The sixth interface 1016 and the seventh 1017 are connected, and the sixth interface 1016 is configured to connect to the inlet of the heater core 207, and the seventh interface 1017 is configured to connect to the outlet of the liquid heater 208.

In such embodiments, a four-way valve and a three-way valve are employed to serve as a five-way valve. A port of the four-way valve is connected with a port of the three-way valve, and the four-way valve and the three-way valve as a whole have only five ports connected with external components.

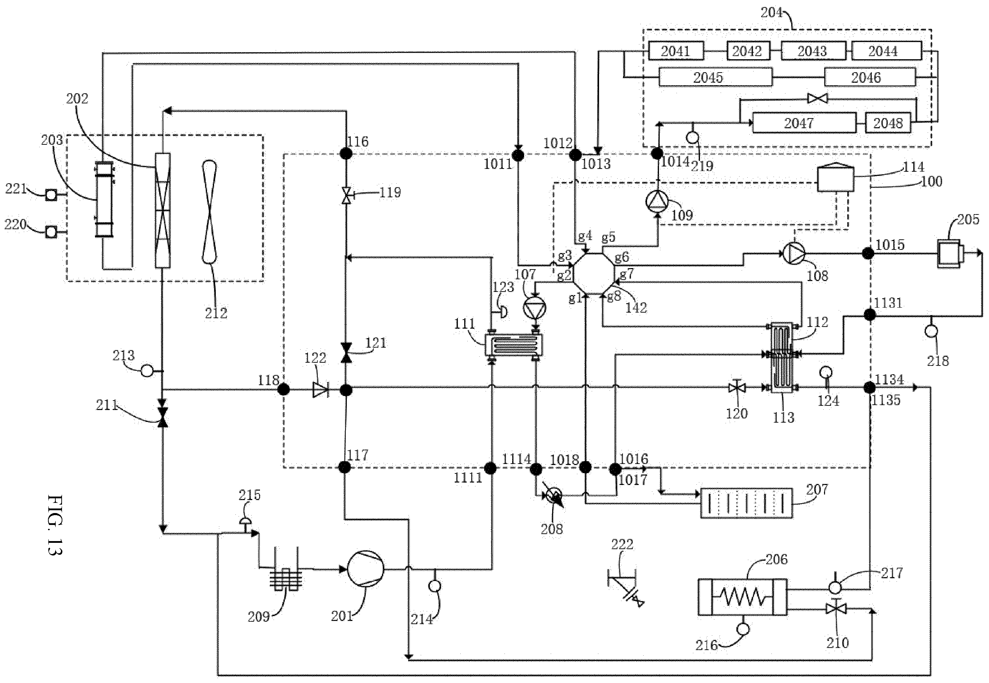

In addition, it will be appreciated that, with reference to FIG. 13, in other embodiments, an eight-way valve may be used in place of the first and second five-way valves 136, 137. Specifically, referring to FIG. 13, in such an embodiment, the first port g1 of the eight-way valve 142 is connected to the eighth interface 1018 through a flow channel, and the eighth interface 1018 is configured to connect to the outlet of the heater core 207. The second port g2 of the eight-way valve 142 is connected with the heating water pump 107 through a flow channel. The third port g3 of the eight-way valve 142 is connected with the first interface 1011 through a flow channel, and the first interface 1011 is configured to connect to the outlet of the radiator 203. The fourth port g4 of the eight-way valve 142 is connected to the second interface 1012 and the third interface 1013 through a flow channel. The second interface 1012 is configured to connect to the inlet of the radiator 203, and the third interface 1013 is configured to connect to the outlet of the electric drive component 204. The fifth port g5 of the eight-way valve 142 is connected with the inlet of the motor water pump 109 through a flow channel. The motor water pump 109 pump is connected to the fourth interface 1014 through a channel, and the fourth interface 1014 is configured to connect to the inlet of the electric drive component 204. The sixth port g6 of the eight-way valve 142 is connected to the inlet of the battery water pump 108 through a flow channel. The battery water pump 108 is connected with the fifth interface 1015 through a flow channel, and the fifth interface 1015 is configured to connect to the inlet of the traction battery 205. The seventh port g7 of the eight-way valve 142 is connected to the first cooling liquid output 1122 of the water-water heat exchanger 112 through a flow channel. The eighth port g8 of the eight-way valve 142 is connected to the second cooling liquid output 1124 of the water-water heat exchanger 112. The second cooling liquid input 1123 of the water-water heat exchanger 112 is connected to the sixth interface 1016 and the seventh interface 1017. The sixth interface 1016 is connected with the seventh interface 1017, and the sixth interface 1016 is configured to connect to the inlet of the heater core 207, and the seventh interface 1017 is configured to connect to the outlet of the liquid heater 208.

In such an embodiment, an eight-way valve is employed to serve as two five-way valves. Two ports, each from one of the two five-way valves, are connected, such that there are only eight ports are connected with external components. Such a configuration of two five-way valves is equivalent to one eight-way valve.

It will be appreciated that in the embodiments where a four-way valve and a three-way valve are employed in place of one five-way valve and the embodiments where an eight-way valve is employed in place of two five-way valves, it is also possible to achieve a variety of different operation modes by controlling the connection of the ports of the valve(s). The mechanism of such embodiments is the same as the mechanism of the embodiments employing a five-way valve, and will not be repeated herein.

In addition, the above description is merely for several exemplary modes that can be achieved with the integrated thermal management unit 100 and the thermal management system 200 of the present invention. It will be appreciated that the integrated thermal management unit 100 of the present invention can achieve modes of the vehicle 300 other than those described above, such as cooling by air conditioning, heating by air conditioning, heating of the traction battery 205, natural heat dissipation of the electric drive component 204, heat preservation of the battery with heat from the electric drive component 204, dehumidification of the passenger compartment, heating of the passenger compartment with heat from the electric drive component 204, de-icing mode, etc., which will not be described herein.

## Claims

1. An integrated thermal management unit (100) for a vehicle (300), comprising:
a flow channel plate (101) having a plurality of flow channels formed therein;
a pump assembly (106) and a valve assembly (110) integrated on the flow channel plate (101), wherein the pump assembly (106) comprises a heating water pump (104), a battery water pump (108) and a motor water pump (109), wherein inlets of the heating water pump (107), the battery water pump (108) and the motor water pump (109) are connected to the valve assembly (110) through the flow channels; and
a water-cooling condenser (111), a water-water heat exchanger (112) and a battery cooler (113) integrated on the flow channel plate (101), wherein the water-cooling condenser (111) is connected to the pump assembly (106),
the integrated thermal vehicle management unit (100) being **characterised in that** the water-water heat exchanger (112) is connected to the pump assembly (106) and the valve assembly (110), the battery cooler (113) is connected to the water-water heat exchanger (112), and the valve assembly (110) is configured to control a flow direction of cooling liquid in the integrated thermal management unit (100) ), wherein:
a cooling liquid input of the water-cooling condenser (111) is connected to an outlet of the heating water pump (107) through the flow channels, a cooling liquid output of the water-cooling condenser (111) being able to connect to an inlet of a liquid heater (208), a coolant input of the water-cooling condenser (111) being able to connect to a compressor (201), and a coolant output (1112) of the water-cooling condenser (111) being able to connect to an outdoor heat exchanger (202) and to the inlet of an evaporator (206);
a coolant input of the battery cooler (113) being able to connect to the outdoor heat exchanger (202) and to the inlet of an evaporator (206), a coolant output of the battery cooler (113) being able to connect to a gas-liquid separator (209) and an outlet of an evaporator (206), a cooling liquid input of the battery cooler (113) is connected with a first cooling liquid input and a first cooling liquid output of the water-water heat exchanger (112), the first cooling liquid output of the water-water heat exchanger (112) is connected to the valve assembly (110) through the flow channels, the cooling liquid input of the battery cooler (113) being able to connect to an outlet of a traction battery (205), and an outlet of the battery water pump (108) being able to connect to an inlet of the traction battery (205); and
a second cooling liquid input of the water-water heat exchanger (112) being able to connect to an outlet of the liquid heater (208) and an inlet of a heater core (207), a second cooling liquid output of the water-water heat exchanger (112) is connected to the valve assembly (110) through the flow channels, and the valve assembly (110) is further configured to connect to an electric drive component (204) and a radiator (203) of the vehicle, wherein the valve assembly (10) is further able to connect to the outlet of the heater core (207).

2. The integrated thermal management unit (100) of claim 1, further comprising a water tank (114) integrated on the flow channel plate (101), wherein the water tank (114) is provided on a top portion of the flow channel plate(101), when mounted on said vehicle (300), and wherein the heating water pump (107), the battery water pump (108) and the motor water pump (109) are connected with the water tank (114) through the flow channels.

3. The integrated thermal management unit (100) of claim 1, wherein the pump assembly (106) and the valve assembly (110) are provided at a bottom portion of the flow channel plate (101), and the battery cooler (113), the water-water heat exchanger (112) and the water-cooling condenser (111) are provided at a side portion of the flow channel plate (101).

4. The integrated thermal management unit (100) of claim 1, wherein:
the flow channel plate (101) has first to eighth interfaces formed thereon, and the valve assembly (110) comprises a first five-way valve (136) and a second five-way valve (137);
a first port (a1) of the first five-way valve (136) is connected to the eighth interface through the flow channels, and the eighth interface being able to connect to an outlet of the heater core (207);
a second port (a2) of the first five-way valve (136) is connected with the heating water pump (107) through the flow channels;
a third port (a3) of the first five-way valve (136) is connected with the first interface through the flow channels, the first interface being able to connect to an outlet of the radiator (203);
a fourth port (a4) of the first five-way valve (136) is connected to a fifth port (b5) of the second five-way valve (137) through the flow channels;
a fifth port (a5) of the first five-way valve (136) is connected to the second cooling liquid output of the water-water heat exchanger (112) through the flow channels;
a first port (b1) of the second five-way valve (137) is connected to the second interface and the third interface through the flow channels, the second interface is connected with the third interface, the second interface being able to connect to an inlet of the radiator (203), and the third interface being able to connect to an outlet of the electric drive component (204);
a second port (b2) of the second five-way valve (137) is connected to the inlet of the motor water pump (109) through the flow channels, the motor water pump (109) is connected to the fourth interface through the flow channels, and the fourth interface being able to connect to an inlet of the electric drive component (204);
a third port (b3) of the second five-way valve (137) is connected to the first cooling liquid output of the water-water heat exchanger (112) through the flow channels;
a fourth port (b4) of the second five-way valve (137) is connected to the inlet of the battery water pump (108) through the flow channels, the battery water pump (108) is connected with the fifth interface through the flow channels, and the fifth interface being able to connect to the inlet of the traction battery (205);
the fifth port (b5) of the second five-way valve (137) is connected to the fourth port (a4) of the first five-way valve (136); and
the second cooling liquid input of the water-water heat exchanger (112) is connected to the sixth interface and the seventh interface, the sixth interface is connected with the seventh interface, the sixth interface being able to connect to the inlet of the heater core (207), and the seventh interface being able to connect to the outlet of the liquid heater (208).

5. The integrated thermal management unit (100) of claim 1, wherein:
the flow channel plate (101) has first to eighth interfaces formed thereon, and the valve assembly (110) comprises a first four-way valve (138), a second four-way valve (139), a first three-way valve (140), and a second three-way valve (141);
a first port (c1) of the first four-way valve (138) is connected to a third port (d3) of the first three-way valve (140), a first port (d1) of the first three-way valve (140) is connected to the eighth interface through the flow channels, and a second port (d2) of the first three-way valve (140) is connected to the second cooling liquid output of the water-water heat exchanger (112) through the flow channels;
a second port (c2) of the first four-way valve (138) is connected with the heating water pump (107) through the flow channels;
a third port (c3) of the first four-way valve (138) is connected with the first interface through the flow channels, and the first interface being able to connect to an outlet of the radiator (203);
a fourth port (c4) of the first four-way valve (138) is connected with a second port (e2) of the second three-way valve (141) through the flow channels;
a first port (e1) of the second three-way valve (141) is connected to the second interface and the third interface through the flow channels, the second interface is connected with the third interface, the second interface being able to connect to an inlet of the radiator (203), and the third interface being able to connect to an outlet of the electric drive component (204);
a third port (e3) of the second three-way valve (141) is connected with a first port (f1) of the second four-way valve (139),
a second port (f2) of the second four-way valve (139) is connected to the inlet of the motor water pump (109) through the flow channels, the inlet of the motor water pump (109) is connected with the fourth interface through the flow channels, and the fourth interface being able to connect to an inlet of the electric drive component (204);
a third port (f3) of the second four-way valve (139) is connected to the first cooling liquid output of the water-water heat exchanger (112) through the flow channels;
a fourth port (f4) of the second four-way valve (139) is connected to the inlet of the battery water pump (108) through the flow channels, the battery water pump (108) is connected with the fifth interface through the flow channels, and the fifth interface being able to connect to the inlet of the traction battery (205); and
the second cooling liquid input of the water-water heat exchanger (112) is connected to the sixth interface and the seventh interface, the sixth interface is connected with the seventh interface, the sixth interface being able to connect to the inlet of the heater core (207), and the seventh interface being able to connect to the outlet of the liquid heater (208).

6. The integrated thermal management unit (100) of claim 1, wherein:
the flow channel plate (101) has first to eighth interfaces formed thereon, and the valve assembly (110) comprises an eight-way valve (142);
a first port (g1) of the eight-way valve (142) is connected to the eighth interface through the flow channels, and the eighth interface being able to connect to an outlet of the heater core (207);
a second port (g2) of the eight-way valve (142) is connected with the heating water pump (107) through the flow channels;
a third port (g3) of the eight-way valve (142) is connected with the first interface through the flow channels, and the first interface being able to connect to an outlet of the radiator (203);
a fourth port (g4) of the eight-way valve (142) is connected to the second interface and the third interface through the flow channels, the second interface is connected with the third interface, the second interface being able to connect to an inlet of the radiator (203), and the third interface being able to connect to an outlet of the electric drive component (204);
a fifth port (g5) of the eight-way valve (142) is connected with the inlet of the motor water pump (109) through the flow channels, the motor water pump (109) is connected to the fourth interface through the flow channels, and the fourth interface being able to connect to an inlet of the electric drive component (204);
a sixth port (g6) of the eight-way valve (142) is connected to the inlet of the battery water pump (108) through the flow channels, the battery water pump (108) is connected with the fifth interface through the flow channels, and the fifth interface being able to connect to the inlet of the traction battery (205);
a seventh port (g7) of the eight-way valve (142) is connected to the first cooling liquid output of the water-water heat exchanger (112) through the flow channels; and
an eighth port (g8) of the eight-way valve (142) is connected to the second cooling liquid output of the water-water heat exchanger (112) through the flow channels, the second cooling liquid input of the water-water heat exchanger (112) is connected to the sixth interface and the seventh interface, the sixth interface is connected with the seventh interface, the sixth interface being able to connect to the inlet of the heater core (207), and the seventh interface being able to connect to the outlet of the liquid heater (208).

7. The integrated thermal management unit (100) of claim 1, further comprising a mounting base (115) and a first throttle (119), wherein the mounting base (115) is integrally mounted on the water-cooling condenser (111) and the battery cooler (113) and has a first coolant interface (116) formed thereon, the first coolant interface (116) connected to the coolant output (1112) of the water-cooling condenser (111) and configured to connect to an inlet of an outdoor heat exchanger (202); and the first throttle (119) is mounted on the mounting base (115) and is connected in series with the first coolant interface (116).

8. The integrated thermal management unit (100) of claim 7, further comprising a pressure-temperature sensor (123) mounted at the coolant output of the water-cooling condenser (111).

9. The integrated thermal management unit (100) of claim 7, further comprising a shutoff valve (121) mounted on the mounting base (115), wherein the mounting base (115) further has a second coolant interface (117) formed thereon, the second coolant interface (117) is connected to the coolant output of the water-cooling condenser (111) and is connected in parallel with the first coolant interface; the shutoff valve (121) is connected in series with the second coolant interface (117) and being able to connect and disconnect the second coolant interface (117) and the coolant output of the water-cooling condenser (111), and the second coolant interface (117) being able to connect to an inlet of an evaporator (206) of the vehicle (300).

10. The integrated thermal management unit (100) of claim 9, wherein:
the battery cooler (113) and the water-water heat exchanger (112) are provided integrally, and the second cooling liquid output of the water-water heat exchanger (112) is connected to the valve assembly (110);
the mounting base further has a third coolant interface formed thereon, wherein the third coolant interface is connected with the coolant input of the battery cooler (113) and the second coolant interface, a one-way valve (122) is mounted at the third coolant interface; and
the battery cooler (113) comprises a first coolant output configured to connect to a gas-liquid separator (209) of the vehicle (300) and a second coolant output configured to connect to the outlet of the evaporator (206), the gas-liquid separator (209) being connected to the compressor (201).

11. The integrated thermal management unit (100) of claim 10, further comprising a second throttle (120) and a temperature sensor (124) both integrated on the battery cooler (113), wherein the throttle is positioned at the coolant input of the battery cooler (113), and the temperature sensor (124) is positioned at the coolant output of the battery cooler (113).

12. The integrated thermal management unit (100) of claim 1, wherein the flow channel plate (101) comprises:
an upper plate (102) and a lower plate (103), wherein at least one of the upper plate (102) and the lower plate (103) has a plurality of flow channel grooves formed thereon, and the upper plate (102) cooperates with the lower plate (103) to enclose the flow channel grooves (104) to form the plurality of flow channels; and preferably
fixing connectors (105) formed thereon and configured to connect to a vehicle body (301) of the vehicle (300).

13. A thermal management system (200) for a vehicle (300), comprising:
a compressor (201);
an outdoor heat exchanger (202);
a radiator (203);
an electric drive component (204);
a traction battery (205);
an evaporator (206);
a heater core (207);
a liquid heater (208);
a gas-liquid separator (209); and
an integrated thermal management unit (100) of any one of claims 1 to 12.

14. A vehicle (300) comprising:
a vehicle body (301); and
a thermal management system (200) of claim 13 mounted on the vehicle body (301).

## Patentansprüche

1. Integrierte Wärmemanagementeinheit (100) für ein Fahrzeug (300), umfassend:
eine Strömungskanalplatte (101) mit einer Mehrzahl von darin gebildeten Strömungskanälen;
eine Pumpenanordnung (106) und eine Ventilanordnung (110), die auf der Strömungskanalplatte (101) integriert sind, wobei die Pumpenanordnung (106) eine Heizwasserpumpe (104), eine Batteriewasserpumpe (108) und eine Motorwasserpumpe (109) umfasst, wobei Einlässe der Heizwasserpumpe (107), der Batteriewasserpumpe (108) und der Motorwasserpumpe (109) durch die Strömungskanäle mit der Ventilanordnung (110) verbunden sind; und
einen Wasserkühlungskondensator (111), einen Wasser-Wasser-Wärmetauscher (112) und einen Batteriekühler (113), die auf der Strömungskanalplatte (101) integriert sind, wobei der Wasserkühlungskondensator (111) mit der Pumpenanordnung (106) verbunden ist,
wobei das integrierte Fahrzeug-Wärmemanagementsystem (100) **dadurch gekennzeichnet ist, dass** der Wasser-Wasser-Wärmetauscher (112) mit der Pumpenanordnung (106) und der Ventilanordnung (110) verbunden ist, der Batteriekühler (113) mit dem Wasser-Wasser-Wärmetauscher (112) verbunden ist, und die Ventilanordnung (110) zum Steuern einer Strömungsrichtung von Kühlflüssigkeit in der integrierten Wärmemanagementeinheit (100) konfiguriert ist, wobei:
ein Kühlflüssigkeitseingang des Wasserkühlungskondensators (111) durch die Strömungskanäle mit einem Auslass der Heizwasserpumpe (107) verbunden ist, ein Kühlflüssigkeitsausgang des Wasserkühlungskondensators (111) mit einem Einlass einer Flüssigkeitsheizung (208) verbunden werden kann, ein Kühlmitteleingang des Wasserkühlungskondensators (111) mit einem Kompressor (201) verbunden werden kann und ein Kühlmittelausgang (1112) des Wasserkühlungskondensators (111) mit einem Außenwärmetauscher (202) und dem Einlass eines Verdampfers (206) verbunden werden kann;
ein Kühlmitteleingang des Batteriekühlers (113) mit dem Außenwärmetauscher (202) und dem Einlass eines Verdampfers (206) verbunden werden kann, ein Kühlmittelausgang des Batteriekühlers (113) mit einem Gas-Flüssigkeits-Abscheider (209) und einem Auslass eines Verdampfers (206) verbunden werden kann, ein Kühlflüssigkeitseingang des Batteriekühlers (113) mit einem ersten Kühlflüssigkeitseingang und einem ersten Kühlflüssigkeitsausgang des Wasser-Wasser-Wärmetauschers (112) verbunden ist, der erste Kühlflüssigkeitsausgang des Wasser-Wasser-Wärmetauschers (112) durch die Strömungskanäle mit der Ventilanordnung (110) verbunden ist, der Kühlflüssigkeitseingang des Batteriekühlers (113) mit einem Auslass einer Traktionsbatterie (205) verbunden werden kann und ein Auslass der Batteriewasserpumpe (108) mit einem Einlass der Traktionsbatterie (205) verbunden werden kann; und
ein zweiter Kühlflüssigkeitseingang des Wasser-Wasser-Wärmetauschers (112) mit einem Auslass der Flüssigkeitsheizung (208) und einem Einlass eines Heizungskerns (207) verbunden werden kann, ein zweiter Kühlflüssigkeitsausgang des Wasser-Wasser-Wärmetauschers (112) durch die Strömungskanäle mit der Ventilanordnung (110) verbunden ist und die Ventilanordnung (110) ferner zum Verbinden mit einer Elektroantriebskomponente (204) und einem Kühler (203) des Fahrzeugs konfiguriert ist, wobei die Ventilanordnung (10) ferner mit dem Auslass des Heizungskerns (207) verbunden werden kann.

2. Integrierte Wärmemanagementeinheit (100) nach Anspruch 1, ferner umfassend einen Wasserbehälter (114), der auf der Strömungskanalplatte (101) integriert ist, wobei der Wasserbehälter (114) auf einem oberen Teil der Strömungskanalplatte (101) bereitgestellt ist, wenn er in das genannte Fahrzeug (300) eingebaut ist, und wobei die Heizwasserpumpe (107), die Batteriewasserpumpe (108) und die Motorwasserpumpe (109) durch die Strömungskanäle mit dem Wasserbehälter (114) verbunden sind.

3. Integrierte Wärmemanagementeinheit (100) nach Anspruch 1, wobei die Pumpenanordnung (106) und die Ventilanordnung (110) an einem unteren Teil der Strömungskanalplatte (101) bereitgestellt sind und der Batteriekühler (113), der Wasser-Wasser-Wärmetauscher (112) und der Wasserkühlungskondensator (111) an einem Seitenteil der Strömungskanalplatte (101) bereitgestellt sind.

4. Integrierte Wärmemanagementeinheit (100) nach Anspruch 1, wobei:
die Strömungskanalplatte (101) daran ausgebildete erste bis achte Schnittstellen aufweist und die Ventilanordnung (110) ein erstes Fünf-Wege-Ventil (136) und ein zweites Fünf-Wege-Ventil (137) umfasst;
ein erster Anschluss (a1) des ersten Fünf-Wege-Ventils (136) durch die Strömungskanäle mit der achten Schnittstelle verbunden ist und die achte Schnittstelle mit einem Auslass des Heizungskerns (207) verbunden werden kann;
ein zweiter Anschluss (a2) des ersten Fünf-Wege-Ventils (136) durch die Strömungskanäle mit der Heizwasserpumpe (107) verbunden ist;
ein dritter Anschluss (a3) des ersten Fünf-Wege-Ventils (136) durch die Strömungskanäle mit der ersten Schnittstelle verbunden ist, die erste Schnittstelle mit einem Auslass des Kühlers (203) verbunden werden kann;
ein vierter Anschluss (a4) des ersten Fünf-Wege-Ventils (136) durch die Strömungskanäle mit einem fünften Anschluss (b5) des zweiten Fünf-Wege-Ventils (137) verbunden ist;
ein fünfter Anschluss (a5) des ersten Fünf-Wege-Ventils (136) durch die Strömungskanäle mit dem zweiten Kühlflüssigkeitsausgang des Wasser-Wasser-Wärmetauschers (112) verbunden ist;
ein erster Anschluss (b1) des zweiten Fünf-Wege-Ventils (137) durch die Strömungskanäle mit der zweiten Schnittstelle und der dritten Schnittstelle verbunden ist, die zweite Schnittstelle mit der dritten Schnittstelle verbunden ist, die zweite Schnittstelle mit einem Einlass des Kühlers (203) verbunden werden kann und die dritte Schnittstelle mit einem Auslass der Elektroantriebskomponente (204) verbunden werden kann;
ein zweiter Anschluss (b2) des zweiten Fünf-Wege-Ventils (137) durch die Strömungskanäle mit dem Einlass der Motorwasserpumpe (109) verbunden ist, die Motorwasserpumpe (109) durch die Strömungskanäle mit der vierten Schnittstelle verbunden ist und die vierte Schnittstelle mit einem Einlass der Elektroantriebskomponente (204) verbunden werden kann;
ein dritter Anschluss (b3) des zweiten Fünf-Wege-Ventils (137) durch die Strömungskanäle mit dem ersten Kühlflüssigkeitsausgang des Wasser-Wasser-Wärmetauschers (112) verbunden ist;
ein vierter Anschluss (b4) des zweiten Fünf-Wege-Ventils (137) durch die Strömungskanäle mit dem Einlass der Batteriewasserpumpe (108) verbunden ist, die Batteriewasserpumpe (108) durch die Strömungskanäle mit der fünften Schnittstelle verbunden ist und die fünfte Schnittstelle mit dem Einlass der Traktionsbatterie (205) verbunden werden kann;
der fünfte Anschluss (b5) des zweiten Fünf-Wege-Ventils (137) mit dem vierten Anschluss (a4) des ersten Fünf-Wege-Ventils (136) verbunden ist; und
der zweite Kühlflüssigkeitseingang des Wasser-Wasser-Wärmetauschers (112) mit der sechsten Schnittstelle und der siebten Schnittstelle verbunden ist, die sechste Schnittstelle mit der siebten Schnittstelle verbunden ist, die sechste Schnittstelle mit dem Einlass des Heizungskerns (207) verbunden werden kann und die siebte Schnittstelle mit dem Auslass der Flüssigkeitsheizung (208) verbunden werden kann.

5. Integrierte Wärmemanagementeinheit (100) nach Anspruch 1, wobei:
die Strömungskanalplatte (101) erste bis achte daran ausgebildete Schnittstellen aufweist und die Ventilanordnung (110) ein erstes Vier-Wege-Ventil (138), ein zweites Vier-Wege-Ventil (139), ein erstes Drei-Wege-Ventil (140) und ein zweites Drei-Wege-Ventil (141) umfasst;
ein erster Anschluss (c1) des ersten Vier-Wege-Ventils (138) mit einem dritten Anschluss (d3) des ersten Drei-Wege-Ventils (140) verbunden ist, ein erster Anschluss (d1) des ersten Drei-Wege-Ventils (140) durch die Strömungskanäle mit der achten Schnittstelle verbunden ist und ein zweiter Anschluss (d2) des ersten Drei-Wege-Ventils (140) durch die Strömungskanäle mit dem zweiten Kühlflüssigkeitsausgang des Wasser-Wasser-Wärmetauschers (112) verbunden ist;
ein zweiter Anschluss (c2) des ersten Vier-Wege-Ventils (138) durch die Strömungskanäle mit der Heizwasserpumpe (107) verbunden ist;
ein dritter Anschluss (c3) des ersten Vier-Wege-Ventils (138) durch die Strömungskanäle mit der ersten Schnittstelle verbunden ist und die erste Schnittstelle mit einem Auslass des Kühlers (203) verbunden werden kann;
ein vierter Anschluss (c4) des ersten Vier-Wege-Ventils (138) durch die Strömungskanäle mit einem zweiten Anschluss (e2) des zweiten Drei-Wege-Ventils (141) verbunden ist;
ein erster Anschluss (e1) des zweiten Drei-Wege-Ventils (141) durch die Strömungskanäle mit der zweiten Schnittstelle und der dritten Schnittstelle verbunden ist, die zweite Schnittstelle mit der dritten Schnittstelle verbunden ist, die zweite Schnittstelle mit einem Einlass des Kühlers (203) verbunden werden kann und die dritte Schnittstelle mit einem Auslass der Elektroantriebskomponente (204) verbunden werden kann;
ein dritter Anschluss (e3) des zweiten Drei-Wege-Ventils (141) mit einem ersten Anschluss (f1) des zweiten Vier-Wege-Ventils (139) verbunden ist,
ein zweiter Anschluss (f2) des zweiten Vier-Wege-Ventils (139) durch die Strömungskanäle mit dem Einlass der Motorwasserpumpe (109) verbunden ist, der Einlass der Motorwasserpumpe (109) durch die Strömungskanäle mit der vierten Schnittstelle verbunden ist und die vierte Schnittstelle mit einem Einlass der Elektroantriebskomponente (204) verbunden werden kann;
ein dritter Anschluss (f3) des zweiten Vier-Wege-Ventils (139) durch die Strömungskanäle mit dem ersten Kühlflüssigkeitsausgang des Wasser-Wasser-Wärmetauschers (112) verbunden ist;
ein vierter Anschluss (f4) des zweiten Vier-Wege-Ventils (139) durch die Strömungskanäle mit dem Einlass der Batteriewasserpumpe (108) verbunden ist, die Batteriewasserpumpe (108) durch die Strömungskanäle mit der fünften Schnittstelle verbunden ist und die fünfte Schnittstelle mit dem Einlass der Traktionsbatterie (205) verbunden werden kann; und
der zweite Kühlflüssigkeitseingang des Wasser-Wasser-Wärmetauschers (112) mit der sechsten Schnittstelle und der siebten Schnittstelle verbunden ist, die sechste Schnittstelle mit der siebten Schnittstelle verbunden ist, die sechste Schnittstelle mit dem Einlass des Heizungskerns (207) verbunden werden kann und die siebte Schnittstelle mit dem Auslass der Flüssigkeitsheizung (208) verbunden werden kann.

6. Integrierte Wärmemanagementeinheit (100) nach Anspruch 1, wobei:
die Strömungskanalplatte (101) erste bis achte daran ausgebildete Schnittstellen aufweist und die Ventilanordnung (110) ein Acht-Wege-Ventil (142) umfasst;
ein erster Anschluss (g1) des Acht-Wege-Ventils (142) durch die Strömungskanäle mit der achten Schnittstelle verbunden ist und die achte Schnittstelle mit einem Auslass des Heizungskerns (207) verbunden werden kann;
ein zweiter Anschluss (g2) des Acht-Wege-Ventils (142) durch die Strömungskanäle mit der Heizwasserpumpe (107) verbunden ist;
ein dritter Anschluss (g3) des Acht-Wege-Ventils (142) durch die Strömungskanäle mit der ersten Schnittstelle verbunden ist und die erste Schnittstelle mit einem Auslass des Kühlers (203) verbunden werden kann;
ein vierter Anschluss (g4) des Acht-Wege-Ventils (142) durch die Strömungskanäle mit der zweiten Schnittstelle und der dritten Schnittstelle verbunden ist, die zweite Schnittstelle mit der dritten Schnittstelle verbunden ist, die zweite Schnittstelle mit einem Einlass des Kühlers (203) verbunden werden kann und die dritte Schnittstelle mit einem Auslass der Elektroantriebskomponente (204) verbunden werden kann;
ein fünfter Anschluss (g5) des Acht-Wege-Ventils (142) durch die Strömungskanäle mit dem Einlass der Motorwasserpumpe (109) verbunden ist, die Motorwasserpumpe (109) durch die Strömungskanäle mit der vierten Schnittstelle verbunden ist und die vierte Schnittstelle mit einem Einlass der Elektroantriebskomponente (204) verbunden werden kann;
ein sechster Anschluss (g6) des Acht-Wege-Ventils (142) durch die Strömungskanäle mit dem Einlass der Batteriewasserpumpe (108) verbunden ist, die Batteriewasserpumpe (108) durch die Strömungskanäle mit der fünften Schnittstelle verbunden ist und die fünfte Schnittstelle mit dem Einlass der Traktionsbatterie (205) verbunden werden kann;
ein siebter Anschluss (g7) des Acht-Wege-Ventils (142) durch die Strömungskanäle mit dem ersten Kühlflüssigkeitsausgang des Wasser-Wasser-Wärmetauschers (112) verbunden ist; und
ein achter Anschluss (g8) des Acht-Wege-Ventils (142) durch die Strömungskanäle mit dem zweiten Kühlflüssigkeitsausgang des Wasser-Wasser-Wärmetauschers (112) verbunden ist, der zweite Kühlflüssigkeitseingang des Wasser-Wasser-Wärmetauschers (112) mit der sechsten Schnittstelle und der siebten Schnittstelle verbunden ist, die sechste Schnittstelle mit der siebten Schnittstelle verbunden ist, die sechste Schnittstelle mit dem Einlass des Heizungskerns (207) verbunden werden kann und die siebte Schnittstelle mit dem Auslass der Flüssigkeitsheizung (208) verbunden werden kann.

7. Integrierte Wärmemanagementeinheit (100) nach Anspruch 1, ferner umfassend eine Montagebasis (115) und eine erste Drossel (119), wobei die Montagebasis (115) einstückig am Wasserkühlungskondensator (111) und am Batteriekühler (113) montiert ist und eine daran ausgebildete erste Kühlmittelschnittstelle (116) aufweist, die erste Kühlmittelschnittstelle (116) mit dem Kühlmittelausgang (1112) des Wasserkühlungskondensators (111) verbunden ist und zum Verbinden mit einem Einlass eines Außenwärmetauschers (202) konfiguriert ist; und die erste Drossel (119) an der Montagebasis (115) montiert ist und mit der ersten Kühlmittelschnittstelle (116) in Reihe geschaltet ist.

8. Integrierte Wärmemanagementeinheit (100) nach Anspruch 7, ferner umfassend einen Druck-Temperatur-Sensor (123), der am Kühlmittelausgang des Wasserkühlungskondensators (111) montiert ist.

9. Integrierte Wärmemanagementeinheit (100) nach Anspruch 7, ferner umfassend ein Absperrventil (121), das an der Montagebasis (115) montiert ist, wobei die Montagebasis (115) ferner eine daran ausgebildete zweite Kühlmittelschnittstelle (117) aufweist, die zweite Kühlmittelschnittstelle (117) mit dem Kühlmittelausgang des Wasserkühlungskondensators (111) verbunden ist und mit der ersten Kühlmittelschnittstelle parallel geschaltet ist; das Absperrventil (121) mit der zweiten Kühlmittelschnittstelle (117) in Reihe geschaltet ist und die zweite Kühlmittelschnittstelle (117) und den Kühlmittelausgang des Wasserkühlungskondensators (111) verbinden und trennen kann und die zweite Kühlmittelschnittstelle (117) mit einem Einlass eines Verdampfers (206) des Fahrzeugs (300) verbunden werden kann.

10. Integrierte Wärmemanagementeinheit (100) nach Anspruch 9, wobei:
der Batteriekühler (113) und der Wasser-Wasser-Wärmetauscher (112) einstückig bereitgestellt sind und der zweite Kühlflüssigkeitsausgang des Wasser-Wasser-Wärmetauschers (112) mit der Ventilanordnung (110) verbunden ist;
die Montagebasis ferner eine daran ausgebildete dritte Kühlmittelschnittstelle aufweist, wobei die dritte Kühlmittelschnittstelle mit dem Kühlmitteleingang des Batteriekühlers (113) und der zweiten Kühlmittelschnittstelle verbunden ist, ein Ein-Weg-Ventil (122) an der dritten Kühlmittelschnittstelle montiert ist; und
der Batteriekühler (113) einen ersten Kühlmittelausgang, der zum Verbinden mit einem Gas-Flüssigkeits-Abscheider (209) des Fahrzeugs (300) konfiguriert ist, und einen zweiten Kühlmittelausgang, der zum Verbinden mit dem Auslass des Verdampfers (206) konfiguriert ist, umfasst, wobei der Gas-Flüssigkeits-Abscheider (209) mit dem Kompressor (201) verbunden ist.

11. Integrierte Wärmemanagementeinheit (100) nach Anspruch 10, ferner umfassend eine zweite Drossel (120) und einen Temperatursensor (124), die beide auf dem Batteriekühler (113) integriert sind, wobei die Drossel am Kühlmitteleingang des Batteriekühlers (113) positioniert ist und der Temperatursensor (124) am Kühlmittelausgang des Batteriekühlers (113) positioniert ist.

12. Integrierte Wärmemanagementeinheit (100) nach Anspruch 1, wobei die Strömungskanalplatte (101) Folgendes umfasst:
eine obere Platte (102) und eine untere Platte (103), wobei mindestens eine von der oberen Platte (102) und der unteren Platte (103) eine Mehrzahl von daran ausgebildeten Strömungskanalnuten aufweist und die obere Platte (102) mit der unteren Platte (103) zusammenwirkt, um die Strömungskanalnuten (104) einzuschließen, um die Mehrzahl von Strömungskanälen zu bilden; und vorzugsweise
Befestigungsverbinder (105), die daran ausgebildet und zum Verbinden mit einer Fahrzeugkarosserie (301) des Fahrzeugs (300) konfiguriert sind.

13. Wärmemanagementsystem (200) für ein Fahrzeug (300), umfassend:
einen Kompressor (201);
einen Außenwärmetauscher (202);
einen Kühler (203);
eine Elektroantriebskomponente (204);
eine Traktionsbatterie (205);
einen Verdampfer (206);
einen Heizungskern (207);
eine Flüssigkeitsheizung (208);
einen Gas-Flüssigkeits-Abscheider (209); und
eine integrierte Wärmemanagementeinheit (100) nach einem der Ansprüche 1 bis 12.

14. Fahrzeug (300), umfassend:
eine Fahrzeugkarosserie (301); und
ein an der Fahrzeugkarosserie (301) montiertes Wärmemanagementsystem (200) nach Anspruch 13.

## Revendications

1. Unité de gestion thermique intégrée (100) pour un véhicule (300), comportant :
une plaque de canaux d'écoulement (101) ayant une pluralité de canaux d'écoulement formés dans celle-ci ;
un ensemble formant pompe (106) et un ensemble formant soupape (110) intégrés sur la plaque de canaux d'écoulement (101), dans laquelle l'ensemble formant pompe (106) comporte une pompe à eau de chauffage (104), une pompe à eau de batterie (108) et une pompe à eau de moteur (109), dans laquelle les entrées de la pompe à eau de chauffage (107), de la pompe à eau de batterie (108) et de la pompe à eau de moteur (109) sont raccordées à l'ensemble formant soupape (110) par l'intermédiaire des canaux d'écoulement ; et
un condenseur de refroidissement à eau (111), un échangeur de chaleur eau-eau (112) et un refroidisseur de batterie (113) intégrés sur la plaque de canaux d'écoulement (101), dans laquelle le condenseur de refroidissement à eau (111) est raccordé à l'ensemble formant pompe (106),
l'unité de gestion thermique intégrée du véhicule (100) étant **caractérisée en ce que** l'échangeur de chaleur eau-eau (112) est raccordé à l'ensemble formant pompe (106) et à l'ensemble formant soupape (110), le refroidisseur de batterie (113) est raccordé à l'échangeur de chaleur eau-eau (112), et l'ensemble formant soupape (110) est configuré pour commander une direction d'écoulement du liquide de refroidissement dans l'unité de gestion thermique intégrée (100), dans laquelle :
une entrée de liquide de refroidissement du condenseur de refroidissement à eau (111) est raccordée à une sortie de la pompe à eau de chauffage (107) par l'intermédiaire des canaux d'écoulement, une sortie de liquide de refroidissement du condenseur de refroidissement à eau (111) étant en mesure de se raccorder à une entrée d'une chaufferette de liquide (208), une entrée de réfrigérant du condenseur de refroidissement à eau (111) étant en mesure de se raccorder à un compresseur (201), et une sortie de réfrigérant (1112) du condenseur de refroidissement à eau (111) étant en mesure de se raccorder à un échangeur de chaleur extérieur (202) et à l'entrée d'un évaporateur (206) ;
une entrée de réfrigérant du refroidisseur de batterie (113) étant en mesure de se raccorder à l'échangeur de chaleur extérieur (202) et à l'entrée d'un évaporateur (206), une sortie de réfrigérant du refroidisseur de batterie (113) étant en mesure de se raccorder à un séparateur gaz-liquide (209) et à une sortie d'un évaporateur (206), une entrée de liquide de refroidissement du refroidisseur de batterie (113) est raccordée à une première entrée de liquide de refroidissement et à une première sortie de liquide de refroidissement de l'échangeur de chaleur eau-eau (112), la première sortie de liquide de refroidissement de l'échangeur de chaleur eau-eau (112) est raccordée à l'ensemble formant soupape (110) par l'intermédiaire des canaux d'écoulement, l'entrée de liquide de refroidissement du refroidisseur de batterie (113) étant en mesure de se raccorder à une sortie d'une batterie de traction (205), et une sortie de la pompe à eau de batterie (108) étant en mesure de se raccorder à une entrée de la batterie de traction (205) ; et
une deuxième entrée de liquide de refroidissement de l'échangeur de chaleur eau-eau (112) étant en mesure de se raccorder à une sortie de la chaufferette de liquide (208) et à une entrée d'un faisceau de chaufferette (207), une deuxième sortie de liquide de refroidissement de l'échangeur de chaleur eau-eau (112) est raccordée à l'ensemble formant soupape (110) par l'intermédiaire des canaux d'écoulement, et l'ensemble formant soupape (110) est par ailleurs configuré pour se raccorder à un composant d'entraînement électrique (204) et à un radiateur (203) du véhicule, dans laquelle l'ensemble formant soupape (10) est par ailleurs en mesure de se raccorder à la sortie du faisceau de chaufferette (207).

2. Unité de gestion thermique intégrée (100) selon la revendication 1, comportant par ailleurs un réservoir d'eau (114) intégré sur la plaque de canaux d'écoulement (101), dans laquelle le réservoir d'eau (114) est mis en œuvre sur une partie supérieure de la plaque de canaux d'écoulement (101), quand il est monté sur ledit véhicule (300), et dans laquelle la pompe à eau de chauffage (107), la pompe à eau de batterie (108) et la pompe à eau de moteur (109) sont raccordées au réservoir d'eau (114) par l'intermédiaire des canaux d'écoulement.

3. Unité de gestion thermique intégrée (100) selon la revendication 1, dans laquelle l'ensemble formant pompe (106) et l'ensemble formant soupape (110) sont mis en œuvre au niveau d'une partie inférieure de la plaque de canaux d'écoulement (101), et le refroidisseur de batterie (113), l'échangeur de chaleur eau-eau (112) et le condenseur de refroidissement à eau (111) sont mis en œuvre au niveau d'une partie latérale de la plaque de canaux d'écoulement (101).

4. Unité de gestion thermique intégrée (100) selon la revendication 1, dans laquelle :
la plaque à canaux d'écoulement (101) comporte des première à huitième interfaces formées sur celle-ci, et l'ensemble formant soupape (110) comporte une première soupape à cinq voies (136) et une deuxième soupape à cinq voies (137) ;
un premier orifice (a1) de la première soupape à cinq voies (136) est raccordé à la huitième interface par l'intermédiaire des canaux d'écoulement, et la huitième interface étant en mesure de se raccorder à une sortie du faisceau de chaufferette (207) ;
un deuxième orifice (a2) de la première soupape à cinq voies (136) est raccordé à la pompe à eau de chauffage (107) par l'intermédiaire des canaux d'écoulement ;
un troisième orifice (a3) de la première soupape à cinq voies (136) est raccordé à la première interface par l'intermédiaire des canaux d'écoulement, la première interface étant en mesure de se raccorder à une sortie du radiateur (203) ;
un quatrième orifice (a4) de la première soupape à cinq voies (136) est raccordé à un cinquième orifice (b5) de la deuxième soupape à cinq voies (137) par l'intermédiaire des canaux d'écoulement ;
un cinquième orifice (a5) de la première soupape à cinq voies (136) est raccordé à la deuxième sortie de liquide de refroidissement de l'échangeur de chaleur eau-eau (112) par l'intermédiaire des canaux d'écoulement ;
un premier orifice (b1) de la deuxième soupape à cinq voies (137) est raccordé à la deuxième interface et à la troisième interface par l'intermédiaire des canaux d'écoulement, la deuxième interface est raccordée à la troisième interface, la deuxième interface étant en mesure de se raccorder à une entrée du radiateur (203), et la troisième interface étant en mesure de se raccorder à une sortie du composant d'entraînement électrique (204) ;
un deuxième orifice (b2) de la deuxième soupape à cinq voies (137) est raccordé à l'entrée de la pompe à eau de moteur (109) par l'intermédiaire des canaux d'écoulement, la pompe à eau de moteur (109) est raccordée à la quatrième interface par l'intermédiaire des canaux d'écoulement, et la quatrième interface étant en mesure de se raccorder à une entrée du composant d'entraînement électrique (204) ;
un troisième orifice (b3) de la deuxième soupape à cinq voies (137) est raccordé à la première sortie de liquide de refroidissement de l'échangeur de chaleur eau-eau (112) par l'intermédiaire des canaux d'écoulement ;
un quatrième orifice (b4) de la deuxième soupape à cinq voies (137) est raccordé à l'entrée de la pompe à eau de batterie (108) par l'intermédiaire des canaux d'écoulement, la pompe à eau de batterie (108) est raccordée à la cinquième interface par l'intermédiaire des canaux d'écoulement, et la cinquième interface étant en mesure de se raccorder à l'entrée de la batterie de traction (205) ;
le cinquième orifice (b5) de la deuxième soupape à cinq voies (137) est raccordé au quatrième orifice (a4) de la première soupape à cinq voies (136) ; et
la deuxième entrée de liquide de refroidissement de l'échangeur de chaleur eau-eau (112) est raccordée à la sixième interface et à la septième interface, la sixième interface est raccordée à la septième interface, la sixième interface étant en mesure de se raccorder à l'entrée du faisceau de chaufferette (207), et la septième interface étant en mesure de se raccorder à la sortie de la chaufferette de liquide (208).

5. Unité de gestion thermique intégrée (100) selon la revendication 1, dans laquelle :
la plaque à canaux d'écoulement (101) comporte des première à huitième interfaces formées sur celle-ci, et l'ensemble formant soupape (110) comporte une première soupape à quatre voies (138), une deuxième soupape à quatre voies (139), une première soupape à trois voies (140) et une deuxième soupape à trois voies (141) ;
un premier orifice (c1) de la première soupape à quatre voies (138) est raccordé à un troisième orifice (d3) de la première soupape à trois voies (140), un premier orifice (d1) de la première soupape à trois voies (140) est raccordé à la huitième interface par l'intermédiaire des canaux d'écoulement, et un deuxième orifice (d2) de la première soupape à trois voies (140) est raccordé à la deuxième sortie de liquide de refroidissement de l'échangeur de chaleur eau-eau (112) par l'intermédiaire des canaux d'écoulement ;
un deuxième orifice (c2) de la première soupape à quatre voies (138) est raccordé à la pompe à eau de chauffage (107) par l'intermédiaire des canaux d'écoulement ;
un troisième orifice (c3) de la première soupape à quatre voies (138) est raccordé à la première interface par l'intermédiaire des canaux d'écoulement, et la première interface étant en mesure de se raccorder à une sortie du radiateur (203) ;
un quatrième orifice (c4) de la première soupape à quatre voies (138) est raccordé à un deuxième orifice (e2) de la deuxième soupape à trois voies (141) par l'intermédiaire des canaux d'écoulement ;
un premier orifice (e1) de la deuxième soupape à trois voies (141) est raccordé à la deuxième interface et à la troisième interface par l'intermédiaire des canaux d'écoulement, la deuxième interface est raccordée à la troisième interface, la deuxième interface étant en mesure de se raccorder à une entrée du radiateur (203), et la troisième interface étant en mesure de se raccorder à une sortie du composant d'entraînement électrique (204) ;
un troisième orifice (e3) de la deuxième soupape à trois voies (141) est raccordé à un premier orifice (f1) de la deuxième soupape à quatre voies (139),
un deuxième orifice (f2) de la deuxième soupape à quatre voies (139) est raccordé à l'entrée de la pompe à eau de moteur (109) par l'intermédiaire des canaux d'écoulement, l'entrée de la pompe à eau de moteur (109) est raccordée à la quatrième interface par l'intermédiaire des canaux d'écoulement, et la quatrième interface étant en mesure de se raccorder à une entrée du composant d'entraînement électrique (204) ;
un troisième orifice (f3) de la deuxième soupape à quatre voies (139) est raccordé à la première sortie de liquide de refroidissement de l'échangeur de chaleur eau-eau (112) par l'intermédiaire des canaux d'écoulement ;
un quatrième orifice (f4) de la deuxième soupape à quatre voies (139) est raccordé à l'entrée de la pompe à eau de batterie (108) par les canaux d'écoulement, la pompe à eau de batterie (108) est raccordée à la cinquième interface par l'intermédiaire des canaux d'écoulement, et la cinquième interface étant en mesure de se raccorder à l'entrée de la batterie de traction (205) ; et
la deuxième entrée de liquide de refroidissement de l'échangeur de chaleur eau-eau (112) est raccordée à la sixième interface et à la septième interface, la sixième interface est raccordée à la septième interface, la sixième interface étant en mesure de se raccorder à l'entrée du faisceau de chaufferette (207), et la septième interface étant en mesure de se raccorder à la sortie de la chaufferette de liquide (208).

6. Unité de gestion thermique intégrée (100) selon la revendication 1, dans laquelle :
la plaque de canaux d'écoulement (101) comporte des première à huitième interfaces formées sur celle-ci, et l'ensemble formant soupape (110) comporte une soupape à huit voies (142) ;
un premier orifice (g1) de la soupape à huit voies (142) est raccordé à la huitième interface par l'intermédiaire des canaux d'écoulement, et la huitième interface étant en mesure de se raccorder à une sortie du faisceau de chaufferette (207) ;
un deuxième orifice (g2) de la soupape à huit voies (142) est raccordé à la pompe à eau de chauffage (107) par l'intermédiaire des canaux d'écoulement ;
un troisième orifice (g3) de la soupape à huit voies (142) est raccordé à la première interface par l'intermédiaire des canaux d'écoulement, et la première interface étant en mesure de se raccorder à une sortie du radiateur (203) ;
un quatrième orifice (g4) de la soupape à huit voies (142) est raccordé à la deuxième interface et à la troisième interface par l'intermédiaire des canaux d'écoulement, la deuxième interface est raccordée à la troisième interface, la deuxième interface étant en mesure de se raccorder à une entrée du radiateur (203), et la troisième interface étant en mesure de se raccorder à une sortie du composant d'entraînement électrique (204) ;
un cinquième orifice (g5) de la soupape à huit voies (142) est raccordé à l'entrée de la pompe à eau de moteur (109) par l'intermédiaire des canaux d'écoulement, la pompe à eau de moteur (109) est raccordée à la quatrième interface par l'intermédiaire des canaux d'écoulement, et la quatrième interface étant en mesure de se raccorder à une entrée du composant d'entraînement électrique (204) ;
un sixième orifice (g6) de la soupape à huit voies (142) est raccordé à l'entrée de la pompe à eau de batterie (108) par l'intermédiaire des canaux d'écoulement, la pompe à eau de batterie (108) est raccordée à la cinquième interface par l'intermédiaire des canaux d'écoulement, et la cinquième interface étant en mesure de se raccorder à l'entrée de la batterie de traction (205) ;
un septième orifice (g7) de la soupape à huit voies (142) est raccordé à la première sortie de liquide de refroidissement de l'échangeur de chaleur eau-eau (112) par l'intermédiaire des canaux d'écoulement ; et
un huitième orifice (g8) de la soupape à huit voies (142) est raccordé à la deuxième sortie de liquide de refroidissement de l'échangeur de chaleur eau-eau (112) par l'intermédiaire des canaux d'écoulement, la deuxième entrée de liquide de refroidissement de l'échangeur de chaleur eau-eau (112) est raccordée à la sixième interface et à la septième interface, la sixième interface est raccordée à la septième interface, la sixième interface étant en mesure de se raccorder à l'entrée du faisceau de chaufferette (207), et la septième interface étant en mesure de se raccorder à la sortie de la chaufferette de liquide (208).

7. Unité de gestion thermique intégrée (100) selon la revendication 1, comportant par ailleurs une base de montage (115) et un premier étranglement (119), dans laquelle la base de montage (115) est montée d'un seul tenant sur le condenseur de refroidissement à eau (111) et le refroidisseur de batterie (113) et comporte une première interface de réfrigérant (116) formée sur celle-ci, la première interface de réfrigérant (116) étant raccordée à la sortie de réfrigérant (1112) du condenseur de refroidissement à eau (111) et configurée pour se raccorder à une entrée d'un échangeur de chaleur extérieur (202) ; et le premier étranglement (119) est monté sur la base de montage (115) et est raccordé en série avec la première interface de réfrigérant (116).

8. Unité de gestion thermique intégrée (100) selon la revendication 7, comportant par ailleurs un capteur de pression-température (123) monté au niveau de la sortie de réfrigérant du condenseur de refroidissement à eau (111).

9. Unité de gestion thermique intégrée (100) selon la revendication 7, comportant par ailleurs une soupape d'arrêt (121) montée sur la base de montage (115), dans laquelle la base de montage (115) comporte par ailleurs une deuxième interface de réfrigérant (117) formée sur celle-ci, la deuxième interface de réfrigérant (117) est raccordée à la sortie de réfrigérant du condenseur de refroidissement à eau (111) et est raccordée en parallèle à la première interface de réfrigérant ; la soupape d'arrêt (121) est raccordée en série à la deuxième interface de réfrigérant (117) et est en mesure de se raccorder et de se séparer par rapport à la deuxième interface de réfrigérant (117) et à la sortie de réfrigérant du condenseur de refroidissement à eau (111), et la deuxième interface de réfrigérant (117) étant en mesure de se raccorder à une entrée d'un évaporateur (206) du véhicule (300).

10. Unité de gestion thermique intégrée (100) selon la revendication 9, dans laquelle :
le refroidisseur de batterie (113) et l'échangeur de chaleur eau-eau (112) sont mis en œuvre d'un seul tenant, et la deuxième sortie de liquide de refroidissement de l'échangeur de chaleur eau-eau (112) est raccordée à l'ensemble formant soupape (110) ;
la base de montage comporte par ailleurs une troisième interface de réfrigérant formée sur celle-ci, dans laquelle la troisième interface de réfrigérant est raccordée à l'entrée de réfrigérant du refroidisseur de batterie (113) et à la deuxième interface de réfrigérant, une soupape unidirectionnelle (122) est montée au niveau de la troisième interface de réfrigérant ; et
le refroidisseur de batterie (113) comporte une première sortie de réfrigérant configurée pour se raccorder à un séparateur gaz-liquide (209) du véhicule (300) et une deuxième sortie de réfrigérant configurée pour se raccorder à la sortie de l'évaporateur (206), le séparateur gaz-liquide (209) étant raccordé au compresseur (201).

11. Unité de gestion thermique intégrée (100) selon la revendication 10, comportant par ailleurs un deuxième étranglement (120) et un capteur de température (124), tous les deux intégrés sur le refroidisseur de batterie (113), dans laquelle l'étranglement est positionné au niveau de l'entrée de réfrigérant du refroidisseur de batterie (113), et le capteur de température (124) est positionné au niveau de la sortie de réfrigérant du refroidisseur de batterie (113).

12. Unité de gestion thermique intégrée (100) selon la revendication 1, dans laquelle la plaque à canaux d'écoulement (101) comporte :
une plaque supérieure (102) et une plaque inférieure (103), dans laquelle au moins l'une parmi la plaque supérieure (102) et la plaque inférieure (103) a une pluralité de rainures de canaux d'écoulement formées sur celle-ci, et la plaque supérieure (102) coopère avec la plaque inférieure (103) de manière à enfermer les rainures (104) des canaux d'écoulement afin de former la pluralité de canaux d'écoulement ; et de préférence
des connecteurs de fixation (105) formés sur celle-ci et configurés pour se raccorder à une carrosserie de véhicule (301) du véhicule (300).

13. Système de gestion thermique (200) pour un véhicule (300), comportant :
un compresseur (201) ;
un échangeur de chaleur extérieur (202) ;
un radiateur (203) ;
un composant d'entraînement électrique (204) ;
une batterie de traction (205) ;
un évaporateur (206) ;
un faisceau de chaufferette (207) ;
une chaufferette de liquide (208) ;
un séparateur gaz-liquide (209) ; et
une unité de gestion thermique intégrée (100) selon l'une quelconque des revendications 1 à 12.

14. Véhicule (300), comportant :
une carrosserie de véhicule (301) ; et
un système de gestion thermique (200) selon la revendication 13, monté sur la carrosserie de véhicule (301).
